# EUROPEAN PATENT SPECIFICATION

(11) **EP 2 477 270 B1**
(45) Date of publication and mention of the grant of the patent: **29.01.2014**
(21) Application number: 10816895.6
(22) Date of filing: 17.09.2010
(51) Int. Cl.: H01M 10/44, H01M 10/052, H01M 10/48, H01M 4/38, H01M 10/04, H01M 4/525, H01M 10/42

(54) **METHOD FOR CHARGING/DISCHARGING POSITIVE ELECTRODE ACTIVE MATERIAL IN A LITHIUM SECONDARY BATTERY, CHARGING/DISCHARGING SYSTEM PROVIDED WITH LITHIUM SECONDARY BATTERY AND VEHICLE, ELECTRONIC DEVICE, BATTERY MODULE, BATTERY PACK**
VERFAHREN ZUR LADUNG/ENTLADUNG EINES POSITIVEN AKTIVEN ELEKTRODENMATERIALS BEI EINER LITHIUMSEKUNDÄRBATTERIE, LADUNGS-/ENTLADUNGSSYSTEM MIT DER LITHIUMSEKUNDÄRBATTERIE UND FAHRZEUG, ELEKTRONISCHE VORRICHTUNG, BATTERIEMODUL, BATTERIEPACKUNG
PROCÉDÉ DE CHARGE/DÉCHARGE DE MATÉRIAU ACTIF D'ÉLECTRODE POSITIVE DANS UNE BATTERIE SECONDAIRE AU LITHIUM, ET VÉHICULE, DISPOSITIF ÉLECTRONIQUE, MODULE DE BATTERIE, BLOC BATTERIE ET SYSTÈME DE CHARGE/DÉCHARGE MUNIS D'UNE BATTERIE SECONDAIRE AU LITHIUM

(30) Priority: 18.09.2009 JP 2009216499; 18.03.2010 JP 2010063025
(43) Date of publication of application: 18.07.2012
(73) Proprietor: Panasonic Corporation, Kadoma-shi Osaka 571-8501 (JP)
(72) Inventor: TAKEZAWA, Hideharu, 2-1-61 Shiromi, Chuo-ku Osaka 540-6207 (JP); IWAMOTO, Kazuya, 2-1-61 Shiromi, Chuo-ku Osaka 540-6207 (JP); YAMAMOTO, Taisuke, 2-1-61 Shiromi, Chuo-ku Osaka 540-6207 (JP); UGAJI, Masaya, 2-1-61 Shiromi, Chuo-ku Osaka 540-6207 (JP); HIRAOKA, Tatsuki, 2-1-61 Shiromi, Chuo-ku Osaka 540-6207 (JP)
(74) Representative: TBK
(86) International application number: PCT/JP2010/005675
(87) International publication number: WO 2011/033781

(56) References cited:
- JP-A- 9 322 417
- JP-A- 2001 258 167
- JP-A- 2002 260 634
- JP-A- 2006 294 469
- US-A1- 2005 206 348
- US-A1- 2005 260 496
- US-A1- 2009 208 834

## Description

### TECHNICAL FIELD

The present invention relates to a charge/discharge method for a lithium secondary battery containing a nickel-type lithium-containing complex oxide as a positive-electrode active material.

### BACKGROUND ART

Lithium secondary batteries have a high capacity and a high energy density, and are easy to be reduced in size and weight, and therefore are widely used as power supplies for small-sized electronic devices for mobile use, e.g., mobile phones, personal digital assistants (PDAs), laptop personal computers, camcorders, and portable game machines, for example. Although small-sized electronic devices for mobile use are required to attain multiple functions, they are yet expected to overcome the cumbersomeness of battery exchange and achieve an enhanced device design. Therefore, there are increasing needs for structures in which a lithium secondary battery(s) is internalized within the device (lithium battery internalization). Moreover, lithium secondary batteries are expected not only as promising power supplies for small-sized electronic devices, but also as promising power supplies for large-sized devices, e.g., hybrid cars, electric vehicles, and power tools.

For adaptability in such applications, a higher capacity, and an improved durability and reliability, e.g., cycle life, are desired of lithium secondary batteries.

In order to attain a further increase in the capacity of lithium secondary batteries, development of positive-electrode active materials is under way. As the positive-electrode active materials, lithium-containing complex oxides are known, such as lithium cobalt oxide (LiCoO₂) and lithium nickel oxide (LiNiO₂) having a layer structure, lithium manganese spinel (LiMn₂O₄) having a spinel structure, and so on.

Among such lithium-containing complex oxides, lithium nickel oxides such as LiNiO₂ have a high reversible capacity (180 to 200 mAh/g) in a voltage range that is used for LiCoO₂, and is capable of occluding and releasing larger amounts of lithium. Therefore, by using LiNiO₂, lithium secondary batteries can be further increased in capacity, while minimizing side reactions such as decomposition of the electrolyte solution.

However, as compared to LiCoO₂, there is a problem associated with LiNiO₂: that is, a low operating potential (working voltage) of lithium occlusion and release. A low operating potential makes it difficult for the energy density of a lithium secondary battery to be further increased. Moreover, the poor stability of the crystal structure of LiNiO₂ also presents a problem of a short charge/discharge cycle life.

Regarding the problem of the low operating potential, Patent Document 1 proposes a technique of using a mixture of a lithium nickel oxide with a lithium cobalt oxide, and carrying out a charging with a voltage which is higher than conventional.

Regarding the problem of a short cycle life, Patent Document 2 proposes using a positive-electrode active material in which a portion of the Ni in LiNiO₂ is substituted by another element such as cobalt (Co) or aluminum (Al), in order to stabilize the crystal structure of the lithium nickel oxide. Non-Patent Document 1 proposes, in a lithium secondary battery whose positive-electrode active material is LiNiO₂, carrying out charge/discharge while limiting the amounts of lithium occlusion and release with respect to LiNiO₂. Specifically, it is stated that, when the lithium nickel oxide is expressed as Li_{1-y}NiO₂, the charge transfer resistance can be lowered by carrying out charge/discharge in a range such that y values are 0.15 < y < 0.75.

Non-Patent Document 2 does not describe any material usable as the positive-electrode active material, but discloses switching the charge voltage of the battery to a lower value ("economy mode (ECO)" when using a device. Owing to this, the range of potential of use on the charge side can be restricted in accordance with the state of use of the device, and therefore the durability of the lithium secondary battery can be improved. For example, Non-Patent Document 2 describes that when the charge voltage is set to a low value in the economy mode to have a charge ratio of 80%, the life of the battery is extended to be 1.5 times longer.

### CITATION LIST

### PATENT LITERATURE

[Patent Document 1] Japanese Laid-Open Patent Publication No. 2006-294482
[Patent Document 2] Japanese Laid-Open Patent Publication No. 8-213015

### NON-PATENT LITERATURE

[Non-Patent Document 1] Journal of Power Sources 54 (1995) 209-213
[Non-Patent Document 2] http://Panasonic.jp/pc/ support/products/r51/mobile.html

Prior art which is related to this field of technology can be found in e.g. document US 2009/0208834 A1 disclosing a secondary battery with auxiliary electrode, in document US 2005/0260496 A1 disclosing a lithium-containing complex oxide, a non-aqueous secondary battery using the lithium-containing complex oxide, and a method for producing the lithium-containing complex oxide, and in document US 2005/0206348 A1 disclosing a battery apparatus and discharge controlling method of battery apparatus.

### SUMMARY OF INVENTION

### TECHNICAL PROBLEM

Even with the aforementioned conventional secondary batteries, it is difficult to reconcile an increased capacity and a long life.

With the technique proposed in Patent Document 1, it is possible to increase the operating potential of the lithium secondary battery, and improve the charge/discharge cycle characteristics up to 100 cycles. However, in order to meet the needs mentioned above, it is necessary to further improve the charge/discharge cycle characteristics. On the other hand, using the positive-electrode active material which is proposed in Patent Document 2 will provide improved charge/discharge cycle characteristics. However, due to a low operating potential, it is difficult to obtain a sufficiently enhanced capacity. Decreasing the amount of lithium that is occluded or released by the positive-electrode active material as proposed in Non-Patent Document 1 will provide some effect of improving reversibility, but capacity increases and long-term improvements in cycle life cannot be attained. In addition, when the lithium secondary battery is charged in the economy mode disclosed in Non-Patent Document 2, the durability can be improved, but the capacity is decreased by 20%. As can be seen, it is difficult to improve the durability while providing a high capacity high with certainty.

The present invention has been made in view of the above circumstances, and an objective thereof is to improve the charge/discharge cycle characteristics of a lithium secondary battery while ensuring a high capacity.

### SOLUTION TO PROBLEM

A charge/discharge method according to the present invention **and a** charge/discharge system according to the present invention **are defined by the respective claims.**

According to the present invention, the discharge end potential of the positive electrode is set to equal to or higher than 2.7 V on a lithium metal basis. Owing to this, the change in the crystalline structure of the positive-electrode active material caused by charge/discharge can be suppressed, and the increase of the reaction resistance caused by the denaturing of the surface of the positive-electrode active material can be decreased. Therefore, the deterioration of the positive electrode caused by the repetition of charge/discharge can be suppressed. In addition, the discharge end potential of the positive electrode is suppressed to a level equal to or lower than 3.4 V. Owing to this, the decrease of the reversible capacity can be suppressed to maintain a high capacity. Accordingly, the charge/discharge reversibility can be improved while a high capacity is obtained with certainty.

### ADVANTAGEOUS EFFECTS OF INVENTION

According to the present invention, in a lithium secondary battery using a nickel-type lithium-containing complex oxide as a positive-electrode active material, a high capacity is obtained with certainty and also the charge/discharge irreversibility can be improved as compared with that by the conventional art.

### BRIEF DESCRIPTION OF DRAWINGS

[FIG. **1A**] FIG. **1A** is a graph showing charge/discharge potential behavior of a nickel-type lithium-containing complex oxide (LiₓNi_{0.815}Co_{0.15}Al_{0.035}O₂).
[FIG. **1B**] FIG. **1B** is a graph showing charge/discharge potential behavior of a nickel-type lithium-containing complex oxide (LiₓNi_{1/3}Mn_{1/3}Co_{1/3}O₂).
[FIG. **2**] FIG. **2** is a graph showing discharge curves of a nickel-type lithium-containing complex oxide (LiₓNi_{0.815}Co_{0.15}Al_{0.035}O₂).
[FIG. **3**] FIGS. **3(a)** through **(c)** are each a schematic isometric view showing an example of lithium secondary battery including a reference electrode.
[FIG. **4**] FIG. **4** is a cross-sectional view schematically showing a structure of evaluation cells A and B.
[FIG. **5**] FIG. **5** is a schematic cross-sectional view showing an example of lithium secondary battery in Embodiment 2 according to the present invention.
[FIG. **6**] FIG. **6** is a graph showing the relationship between the discharge end potential and the capacity deterioration rate of a positive electrode in evaluation cells A and B.
[FIG. **7**] FIG. **7** is a graph showing the relationship between the discharge end potential and the capacity deterioration rate of evaluation cells A and B.
[FIG. **8**] FIG. **8** is a block diagram schematically showing a structure of a charge/discharge system **100** in Embodiment 3 according to the present invention.
[FIG. **9**] FIG. **9** is a circuit diagram of the charge/discharge system **100** in Embodiment 3 according to the present invention.
[FIG. **10**] FIG. **10** is a block diagram showing a structure of another charge/discharge system **102** in Embodiment 3 according to the present invention.
[FIG. **11**] FIG. **11** is a flowchart showing a program usable in the charge/discharge system **102** shown in FIG. **10****.**
[FIG. **12**] FIG. **12** is a block diagram showing a structure of still another charge/discharge system **103** in Embodiment 3 according to the present invention.
[FIG. **13**] FIG. **13** is a block diagram showing a structure of a charge/discharge system **104** in Embodiment 4 according to the present invention.
[FIG. **14**] FIG. **14** is a flowchart showing an example of charge/discharge control based on a measured value of positive electrode potential Vp.
[FIG. **15**] FIG. **15** is a flowchart showing an example of charge/discharge control based on a measured value of negative electrode potential Vn.
[FIG. **16**] FIG. **16** is a flowchart showing an example of charge/discharge control based on a measured value of battery voltage Vc.
[FIG. **17**] FIG. **17** is a schematic view showing an example of discharge curves X and Y of a lithium secondary battery at 25°C and 45°C.
[FIG. **18**] FIG. **18** is a circuit diagram showing a structure of a charge/discharge system in Embodiment 5 according to the present invention.
[FIG. **19**] FIG. **19** is a flowchart showing an example of charge/discharge method in Embodiment 5 according to the present invention.
[FIG. **20**] FIG. **20** is a vertical cross-sectional view showing an example of production device of a negative electrode of a lithium secondary battery.
[FIG. **21**] FIG. **21** is a graph showing an example of discharge curve of a positive-electrode active material.

### DESCRIPTION OF EMBODIMENTS

The inventors have earnestly conducted studies concerning a charge/discharge method for reconciling high capacity and charge/discharge reversibility, by using a lithium-containing complex oxide as a positive-electrode active material. In doing so, it was found that the potential region of use of a positive-electrode active material, in particular at the discharge side, is greatly related to charge/discharge reversibility. Specifically, it was found that, in a charge/discharge context, charge/discharge reversibility is strongly correlated not only to the amount of lithium occluded or released by the positive-electrode active material, but also to a discharge end potential as taken on a lithium metal basis.

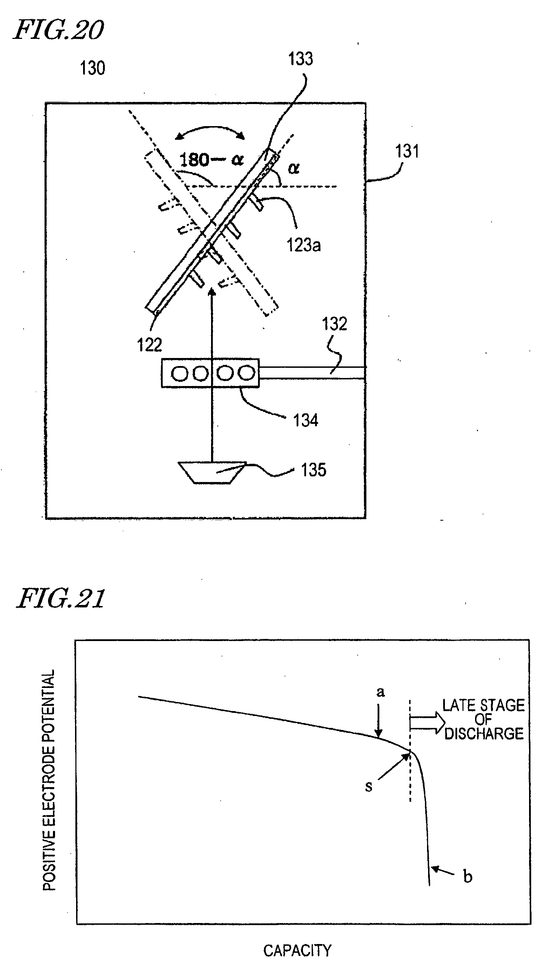

FIG. **21** is a graph illustrating an exemplary discharge curve of a positive-electrode active material of a lithium secondary battery, where the horizontal axis represents capacity and the vertical axis represents the potential of the positive-electrode active material. As shown in the figure, in a late stage of discharge, polarization increases due to the slowing of an occlusion reaction of lithium into the positive-electrode active material, whereby the discharge potential becomes greatly lowered. On the other hand, changes in capacity are very small in the late stage of discharge.

Through a study of the inventors, it was found that deterioration of the positive-electrode active material occurs if discharge is performed until the discharge potential becomes low (e.g., until reaching potential **b**) in the late stage of discharge. This is presumably because of changes in the crystal structure of the lithium-containing complex oxide which is the positive-electrode active material. In a positive-electrode active material layer that contains a lithium-containing complex oxide, a new crystal phase with low reversibility may possibly occur even in the late stage of discharge if the amount of lithium x locally exceeds 1.0 (x > 1.0). The presumable reason is that in a region of the positive electrode defined by a slow occlusion reaction of lithium, a reaction distribution is likely to emerge in the interior of the active material, so that the surface attains a deeper discharging state. It has also been found, as a result of this, that the active material surface becomes denatured through repetition of charge/discharge cycles, thus promoting the increase in the reaction resistance.

If an excessively high discharge end potential is set (e.g., potential ***a***), the discharge will be finished before reaching the late stage of discharge, at which the discharge potential drastically drops in the discharge curve shown in FIG. **21**. This prevents a sufficient capacity from being secured. Moreover, if the discharge is ended at any point before reaching potential ***a*,** as the polarization increases with an increase in internal resistance over the cycles, the end voltage timing of the battery will become extremely early due to the potential changes being gentle, thus resulting in a significant decrease in capacity. In order to reduce the decrease in capacity, the discharge end potential needs to be set at or below the potential of a point at which the discharge potential drastically drops (e.g., potential ***s***)***.***

Based on the above findings, the inventors have found that, by controlling the discharge end potential of the positive-electrode active material to be within a specific potential range, the charge/discharge reversibility (charge/discharge cycle characteristics) can be remarkably improved relative to the conventional level, while minimizing decreases in the reversible capacity. Thus, the inventors arrived at the present invention.

According to the present invention, in a charge/discharge method for a lithium secondary battery which uses a lithium-containing complex oxide as a positive-electrode active material, the discharge potential of the positive electrode is suppressed to a level equal to or lower than 3.4 V, at which the discharge potential significantly lowers in a late stage of discharge. Owing to this, the decrease in the battery capacity can be minimized. In addition, by controlling the discharge end potential to be equal to or higher than 2.7 V, the deterioration of the positive-electrode active material caused by repetition of charge/discharge can be suppressed. As a result, the charge/discharge cycle characteristics can be improved while ensuring a sufficient capacity.

In a conventional lithium secondary battery, for example, lithium cobalt oxide is used as the positive-electrode active material, and graphite is used as the negative-electrode active material. Generally in such a lithium secondary battery, when the potential of the positive electrode drastically drops and the capacity change with respect to the potential change becomes about zero (e.g., potential ***b*** shown in FIG. **21**), the discharge is finished. When to finish the discharge is determined by the minimum voltage of the device, the potential change of the active material itself, or the amount (capacity) of the active materials of the positive electrode and the negative electrode. Therefore, conventionally, there is no idea of finishing the discharge by controlling the discharge potential of the positive electrode to be a prescribed potential (discharge end potential). It is not conventionally recognized that when a nickel-type lithium-containing complex oxide is used as the positive-electrode active material, the charge/discharge reversibility and the range of potential of use on the discharge side are correlated to each other.

### (EMBODIMENT 1)

Hereinafter, Embodiment 1 according to the present invention will be described. This embodiment regards a charge/discharge method for a positive electrode of a lithium secondary battery. The lithium secondary battery includes the positive electrode containing a positive-electrode active material, a negative electrode containing a negative-electrode active material capable of occluding and releasing lithium, a separator located between the positive electrode and the negative electrode, and a nonaqueous electrolyte.

The positive-electrode active material in the present embodiment is a nickel-type lithium-containing complex oxide capable of occluding and releasing lithium. The nickel-type lithium-containing complex oxide may be an LiNiO₂-based material in which a portion of the Ni is substituted by another element selected from the group consisting of Mg, Sc, Y, Mn, Fe, Co, Ni, Cu, Zn, Al, Cr, Pb, Sb, and B.

In this embodiment, the discharge end potential of the positive electrode at the end of discharge is controlled to be no less than 2.7 V and no more than 3.4 V on a lithium basis. Owing to this, the reversibility can be improved while suppressing the decrease in battery capacity.

With reference to the drawings, the discharge characteristics in the case where a nickel-type lithium-containing complex oxide is used as a positive-electrode active material will be described.

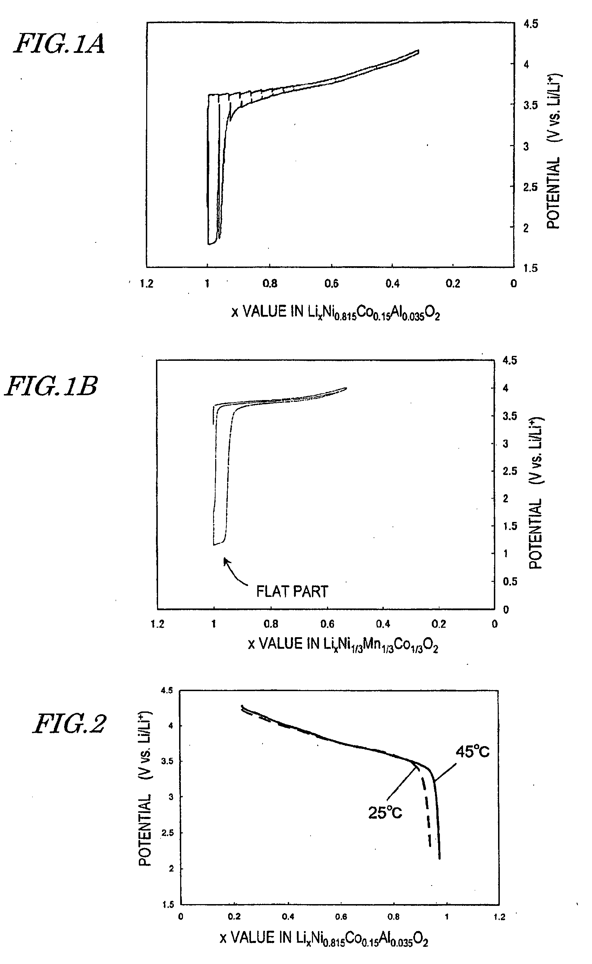

FIG. **1A** is a graph showing typical charge/discharge potential behavior of a nickel-type lithium-containing complex oxide (25°C). The graph shown in FIG. **1A** shows a result of measuring potential changes when LiₓNi_{0.815}Co_{0.15}Al_{0.035}O₂ was used as the nickel-type lithium-containing complex oxide, where the x value was varied in the range of 0.3 ≤ x ≤ 1.0.

In the measurement, the aforementioned nickel-type lithium-containing complex oxide was intermittently charged or discharged with a current density of 0.3 mA/cm². During the charge/discharge, the current was paused at a constant interval to measure open-circuit potentials. Each pause time was 1 hour. By consecutively repeating current application and pausing, the potential behavior with respect to the x value was plotted in FIG. **1A**. In the graph shown in FIG. **1A**, spike-shaped potential changes occur at a number of x values. These are the changes when the charge/discharge was paused at those x values, each indicating an open-circuit potential at that point.

As these results indicate, in the range where the x value is no less than 0.3 but less than 0.8, the difference between the closed-circuit potential and the open-circuit potential during charge and discharge is small. However, when the x value is no less than 0.8, the difference between the closed-circuit potential and the open-circuit potential during discharge gradually increases, and soars when the x value becomes greater than about 0.9, for example. This is presumably because of the slow lithium occlusion by the positive-electrode active material appearing as polarization. It was learned through a crystallography based on X-ray diffraction that a portion of the crystal structure of the positive-electrode active material when lithium is occluded through a complete discharge down to x = 1.0 changes into a structure which is different from the crystal structure of the positive-electrode active material before the charge/discharge.

FIG. **1B** is a graph showing charge/discharge potential behavior of LiₓNi_{1/3}Mn_{1/3}Co_{1/3}O₂ (25°C). The behavior of LiₓNi_{1/3}Mn_{1/3}Co_{1/3}O₂ is similar to the behavior of LiₓNi0_{.815}Co_{0.15}Al_{0.035}O₂ shown in FIG. **1A**. Namely, when the x value becomes no less than 0.8, polarization increases in a late stage of discharge and the potential drastically drops. Then, the potential curve is kept flat at around 1.2 V until the x value becomes x = 1.0. It was found that in the case of this type of nickel-type lithium-containing complex oxide also, once the potential is kept flat, the polarization characteristics are deteriorated thereafter and thus the charge/discharge reversibility is lowered.

Namely, a positive-electrode active material exhibiting the discharge potential behavior as shown in each of FIG. **1A** and FIG. **1B** causes a more or less similar phenomenon in a late stage of discharge and thus the charge/discharge reversibility is lowered. This phenomenon is commonly observed in lithium-containing complex oxides containing Ni as a main component.

The details of the relationship between the phenomenon described with reference to FIG. **1A** and FIG. **1B** and the charge/discharge reversibility are not yet clear. The inventors' inference is that, when a region with a large reaction resistance that exists in the late stage of discharge is repetitively used, at least a portion of the positive-electrode active material gradually denatures into a crystal phase with low reversibility, thus resulting in an increase in the reaction resistance over the charge/discharge cycles.

Based on the above inference, finishing the discharge before the reaction resistance soars might improve the charge/discharge reversibility, when conducting a discharge at the positive electrode. However, if the time to finish the discharge is set so early that the discharge is finished e.g., before reaching the late stage of discharge (that is, before the changes in the discharge potential soars), the capacity will be lowered. Therefore, in order to improve the charge/discharge reversibility while conserving the capacity, it is necessary to control the time to finish the discharge.

On the other hand, the inventors have conducted a further study to find that increasing the ambient temperature (e.g. 45°C) or extremely lowering the current density (e.g. 0.06 mA/cm²) will reduce the polarization in the region where the x value is equal to or higher than 0.8, thus increasing the available capacity at a high discharge end potential. In other words, although the graph shown in FIG. **1A** shows that the point of sudden increase in the polarization has an x value near 0.9 and the point of sudden increase in the potential change has an x value near 0.8 during discharge, these x values may change with different ambient temperatures, current densities, and so on. Hereinafter, this will be explained with reference to specific examples.

FIG. **2** is a graph showing a discharge potential curve of a positive electrode whose positive-electrode active material is a nickel-type lithium-containing complex oxide. Herein, LiNi_{0.815}Co_{0.15}Al_{0.035}O₂ was used, and a discharge potential curve was determined by setting a current density of 3.0 mA/cm², a charge end potential of 4.25 V, and a discharge end potential of 2.0 V. The ambient temperature was 25°C or 45°C.

As the results shown in FIG. **2** indicate, the discharge potential hardly changes with temperature until the x value reaches 0.8. As the x value exceeds 0.8, the potential change suddenly increases at the ambient temperature of 25°C, but the potential change is small at the ambient temperature of 45°C. Moreover, at the ambient temperature of 25°C, the polarization increases when the x value exceeds e.g. 0.9; however, at the ambient temperature of 45°C, the polarization remains small even when the x value exceeds 0.9, but the polarization increases after the x value exceeds 0.95. At the ambient temperature of 45°C, the capacity is increased by about 6% from that when the ambient temperature is 25°C. Although not shown, in the case of the nickel-type lithium-containing complex oxide shown in FIG. **1B** (LiₓNi_{1/3}Mn_{1/3}Co_{1/3}O₂) also, when the ambient temperature is raised (e.g., 45°C), the polarization is decreased in a late stage of discharge, and the discharge capacity at 2 V or higher is increased by about 6% from that when the ambient temperature is 25°C.

Thus, during discharge, the x value of the point of sudden increase in the potential change and the x value of the point of sudden increase in the polarization may vary depending on the ambient temperature. This makes it difficult to determine the time to finish the discharge on the basis of the x value (i.e., the amount of lithium that is occluded by the positive-electrode active material). For example, if control is so made that the discharge is finished at a point where the x value reaches 0.9, a high capacity will be obtained with an ambient temperature of 45°C, but the capacity may be lowered with an ambient temperature of 25°C. On the other hand, if control is so made that the discharge is finished at a point where the x value reaches 0.95, deterioration of the positive electrode can be suppressed with an ambient temperature of 45°C, but deterioration of the positive electrode cannot be suppressed with an ambient temperature of 25°C.

Conversely, the potential of the positive electrode at a point where a sudden increase occurs in the potential change or in the polarization during discharge will not vary depending on the ambient temperature or the like. Therefore, by controlling the time to finish the discharge on the basis of the potential of the positive electrode, it becomes possible to suppress deterioration of the positive electrode and improve reversibility while maintaining a high capacity, irrespective of the ambient temperature and current density.

Specifically, as shown in FIG. **2**, regardless of the ambient temperature, the potential change suddenly increases and the changes in reversible capacity become small when the discharge potential of the positive electrode is about 3.4 V. Therefore, if discharge is finished before the discharge potential of the positive electrode reaches 3.4 V, the charge/discharge reversibility will be improved, but the reversible capacity will be greatly lowered. Moreover, when the internal resistance increases over the charge/discharge cycles, decreases in capacity due to increasing polarization will appear more significantly because the potential changes is gentle. On the other hand, irrespective of the ambient temperature, when the discharge potential of the positive electrode is lower than 2.7 V, the polarization increases and the reaction resistance increases. Therefore, if discharge is performed until the discharge potential of the positive electrode becomes less than 2.7 V, a high reversible capacity will be obtained, but the charge/discharge reversibility will be greatly lowered. Accordingly, by finishing the discharge while the discharge potential of the positive electrode is no less than 2.7 V and no more than 3.4 V, reversible capacity and charge/discharge reversibility can be reconciled. More preferably, discharge is finished at no less than 2.7 V and no more than 3.3 V. Owing to this, the reversible capacity can be further improved.

As the positive-electrode active material in the present embodiment, among nickel-type lithium-containing complex oxides, it is preferable to use LiₐNi_{1-(b+c)}Co_{b}M_{c}O₂ (where 1.0 ≤ a ≤ 1.05, 0.1 ≤ b ≤ 0.35, 0.005 ≤ c ≤ 0.30; M is at least one kind selected from among Al, Sr, and Ca).

Generally speaking, an LiNiO₂-type active material has a problem in that there are relatively large changes in the crystal structure due to charge/discharge, so that good reversibility cannot be obtained. However, by adjusting its composition as discussed above, it is possible to obtain an improved reversibility while maintaining a high capacity. The reasons thereof are described below.

When the a value is no less than 1.0, there is a sufficient amount of lithium salt used as the source material, and the presence of impurities which are electrochemically inactive, e.g., nickel oxide and cobalt oxide, will be reduced, so that decreases in capacity will be less likely to occur. When the a value is no more than 1.05, there is no excess of lithium salt used as the source material, so that lithium compounds are restrained from remaining as impurities, whereby decreases in capacity will similarly become less likely to occur. Note that the a value is a composition ratio in the uncharged state.

When the *b* value is no less than 0.10, the charge/discharge reversibility can be improved with greater certainty. When the *b* value is no more than 0.35, decreases in capacity are unlikely to occur. Furthermore, it is preferable in terms of thermal stability that the *c* value is in the range of 0.005 ≤ c ≤ 0.30.

A charge/discharge method for a positive electrode in this embodiment is widely applicable to lithium secondary batteries which uses a nickel-type lithium-containing complex oxide as a positive-electrode active material. Such a lithium secondary battery may be a stacked-type lithium secondary battery including an electrode group obtained by stacking a positive electrode, a separator and a negative electrode, or may be a wound-type lithium secondary battery obtained by winding the electrode group a plurality of times.

The lithium secondary battery used in this embodiment may include a third electrode (reference electrode) in addition to the positive electrode and the negative electrode. Owing to this, the potential of the positive electrode on a lithium metal basis can be detected based on the potential difference between the reference electrode and the positive electrode. Therefore, the time to finish the discharge can be controlled more precisely.

In a lithium secondary battery with no reference electrode, it is set to, for example, finish the discharge by sensing the voltage of the battery (battery voltage) corresponding to a prescribed positive electrode potential. By contrast, in a lithium secondary battery including a reference electrode, the positive electrode potential is monitored on a basis of the reference electrode (e.g., lithium metal). It is set to finish the discharge of the battery at the time when the positive electrode potential is sensed to have reached a prescribed discharge potential (2.7 to 3.4 V). In this manner, the potential of the positive electrode is directly detected to finish the discharge. Therefore, the discharge can be finished more certainly at a desirable point in time. Thus, the deterioration of the positive electrode can be suppressed more effectively. Both of the battery voltage and the positive electrode potential may be monitored using a lithium secondary battery including a reference electrode.

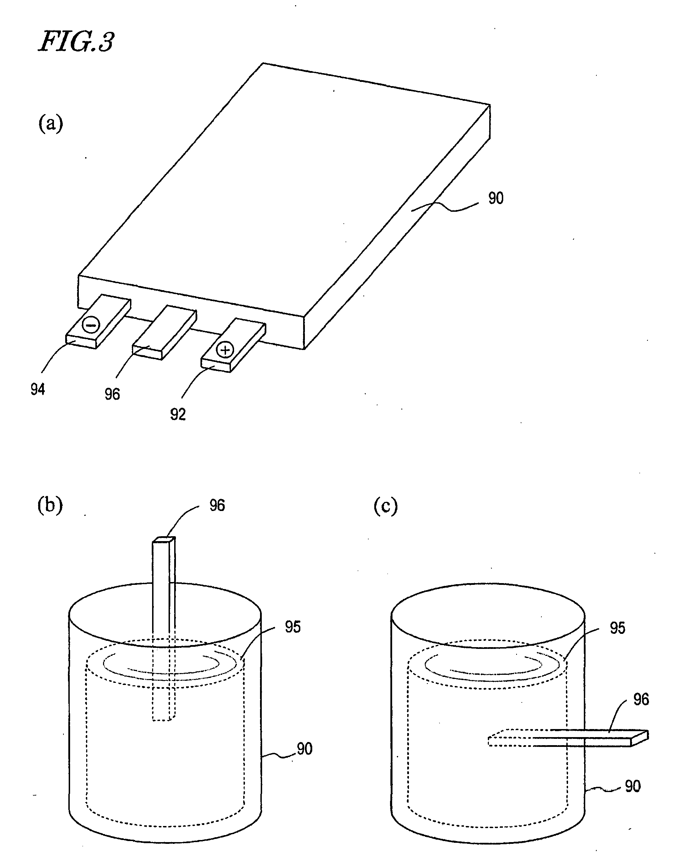

FIGS. **3(a)** through **(c)** are each an isometric view showing an example of structure of a lithium secondary battery including a reference electrode.

FIG. **3(a)** shows an example of stacked-type lithium secondary battery. With this structure, the reference electrode is located in the vicinity of the electrode group provided in a stacked manner in an outer case **90.** The positive electrode and the negative electrode in the electrode group are connected to a positive electrode tab **92** and a negative electrode tab **94**, respectively. The reference electrode is connected to a reference electrode tab **96.** The reference electrode tab **96** is extended outside the outer case **90** as well as the positive electrode tab **92** and the negative electrode tab **94.** In the example shown in the figure, the reference electrode tab **96** is extended outside from a side surface of the outer case **90**, but the position at which the reference electrode tab **96** is extended outside is not specifically limited.

It is preferable that the outer case **90** is formed of a laminated film. Owing to this, the freedom of location of the reference electrode tab **96** is raised. This allows the position at which the reference electrode tab **96** is extended outside to be selected in accordance with the shape, environment of use, application or the like of the battery. The outer case **90** may be a metal case, a resin case, a ceramic case or the like.

FIGS. **3(b)** and **(c)** each show an example of wound-type lithium secondary battery. With this structure, the reference electrode is located in the vicinity of the center of an electrode group **95** provided in a wound manner. The reference electrode is connected to the reference electrode tab **96**, and the reference electrode tab **96** is extended outside the outer case **90.** The position at which the reference electrode tab **96** is extended outside is not specifically limited. The reference electrode tab **96** may be extended outside from a top surface of the outer case **90** as shown in FIG. **3(b)** or from a position near the center of a side surface of the outer case **90** as shown in FIG. **3(c)****.**

The structure of the lithium secondary battery including the reference electrode is not limited to those shown in FIGS. **3(a)** through **(c)****.**

There are no specific limitations as to the material of the reference electrode as long as the equilibrium potential is stable in the system of the lithium secondary battery. For example, lithium metal, silver, gold, platinum or the like is usable. In the case where a material other than lithium metal is to be used, the potential of the material with respect to the lithium metal is measured in advance. Owing to this, a measured value of the potential difference between the reference electrode and the positive electrode can be corrected to the positive electrode potential on a lithium metal basis.

There are no specific limitations as to the size, position or number of the reference electrode as long as the reference electrode is located in the vicinity of the electrode to be monitored. The negative electrode potential may be monitored in addition to the positive electrode potential by use of the same reference electrode, and the charge/discharge of the lithium secondary battery can be controlled based on these potentials.

An assembled battery may be produced by combining a plurality of lithium secondary batteries each including a reference electrode. In an assembled battery produced by connecting a plurality lithium secondary batteries with no reference electrode in series, the voltage is usually controlled based on the voltage of terminals at both ends of the assembly of the lithium secondary batteries. Therefore, when the lithium secondary batteries included in the assembled battery are deteriorated by different degrees as the charge/discharge cycle proceeds, the lithium secondary battery having the characteristics thereof deteriorated by a larger degree may undesirably be discharged excessively on the discharge side. When a positive electrode using a nickel-type lithium-containing complex oxide as the positive-electrode active material is caused excessive discharge (deep discharge), the deterioration thereof may be possibly accelerated by the phenomenon described above. For preventing this, monitoring the terminal voltage of each lithium secondary battery is considered to be effective. In the case where the plurality of lithium secondary batteries included in the assembled battery each include a reference electrode, the positive electrode potential with respect to the reference electrode of each lithium secondary battery can be controlled in addition to, or instead of, the terminal voltage of each lithium secondary battery being monitored. Owing to this, the deterioration of the positive electrode of each lithium secondary battery included in the assembled battery can be prevented more certainly.

In this embodiment, there are no specific limitations as to the source material of the negative-electrode active material, the material of the separator, the nonaqueous electrolyte or the like, or the structure of the battery.

This embodiment is applicable to a charge/discharge system including a lithium secondary battery. Such a charge/discharge system may include, for example, a lithium secondary battery, a discharge control section for controlling discharge of the lithium secondary battery, and a voltage measurement section for sensing the battery voltage of the lithium secondary battery during discharge. The charge/discharge system may further include a charge control section for controlling charge of the lithium secondary battery, and a load section connected to the lithium secondary battery. The discharge control section finishes the discharge when the discharge potential of the positive-electrode active material on a lithium metal basis reaches a prescribed potential which is no less than 2.7 V and no more than 3.4 V.

In this embodiment, it is preferable that the capacity of the negative-electrode active material is designed to be larger than the capacity of the positive-electrode active material. Owing to this, the situation where the discharge potential of the negative-electrode active material rises drastically before the discharge potential of the positive-electrode active material reaches the prescribed potential and the discharge is finished can be prevented.

The charge/discharge system in this embodiment is not limited to having the above-described structure. The voltage measurement section may directly measure the discharge potential of the positive-electrode active material, or may measure the battery voltage during the discharge, instead. Alternatively, the voltage measurement section may measure both of the discharge potential of the positive-electrode active material and the battery voltage. The discharge control section finishes the discharge when sensing that the discharge potential of the positive-electrode active material has reached a prescribed discharge end potential based on the value measured by the voltage measurement section (the measured value of the battery voltage, the measured value of the discharge potential, or both of them). For example, the discharge control section may finish the discharge when the battery voltage measured by the voltage measurement section reaches a prescribed threshold voltage corresponding to the prescribed discharge end potential ("first threshold voltage"). The "first threshold voltage" is set to a level in a range of battery voltage at which the discharge potential of the positive-electrode active material on a lithium metal basis is no less than 2.7 V and no more than 3.4 V.

In the case where the time to finish the discharge is controlled by use of the battery voltage as described above, it is preferable to perform a preliminary charge/discharge test using the electrode group to be used in the charge/discharge system. By performing the preliminary charge/discharge test, the range of battery voltage at which the discharge potential of the positive-electrode active material is no less than 2.7 V and no more than 3.4 V can be found in advance. The first threshold voltage may be set to be within such a range.

In the case where, for example, graphite is used as the negative-electrode active material (in the case where the irreversible capacity of the positive electrode is larger than the irreversible capacity of the negative electrode; or in the case where the irreversible capacity of the negative electrode is provided as supplement in advance), the discharge potential of the negative electrode is generally constant in a late stage of discharge of the positive electrode. Therefore, the battery voltage is determined by the discharge potential of the positive electrode. The range of battery voltage corresponding to the discharge potential of the positive-electrode active material of no less than 2.7 V and no more than 3.4 V is, for example, more than 2.5 V and no more than 3.2 V. Accordingly, the first threshold voltage may be in the range of more than 2.5 V and no more than 3.2 V.

In the case where, for example, a silicon-based alloy or oxide is used as the negative-electrode active material (in the case where the irreversible capacity of the positive electrode is larger than the irreversible capacity of the negative electrode; or in the case where the irreversible capacity of the negative electrode is provide as supplement in advance), the potential of the negative electrode slowly rises in the range of 0.4 V to 0.7 V in a late stage of discharge of the positive electrode. Therefore, the battery voltage is not determined by the discharge potential of the positive electrode only, but depends also on the potential change of the negative electrode. In this case also, the range of battery voltage corresponding to the discharge potential of the positive electrode of no less than 2.7 V and no more than 3.4 V is found by the above-described preliminary charge/discharge test, and thus the first threshold voltage can be set. In this case, the range of battery voltage is, for example, no less than (2.7 - Vₙ₁) and no more than (3.4 - Vₙ₂) (Vₙ₁, Vₙ₂: 0.4 to 0.7 V).

The above-described charge/discharge system is broadly applicable to the power supplies of electronic devices such as mobile phones, vehicles such as electric vehicles, and electric motors of power tools or the like, for example. Devices such as electronic devices, vehicles, and power tools may be constructed so that a battery pack (or battery module) having the aforementioned charge/discharge system is detachably attached thereto. In this case, a control device including a charge control section, a discharge control section, and a voltage measurement section may be provided within the battery pack (or battery module). Alternatively, the control device may be provided at the device side.

In the present specification, a "battery pack" refers to one or more batteries (cells) being accommodated within a single container. For safety concerns and the like, a protection circuit and a control circuit are optionally provided in the battery pack. On the other hand, a large-sized power supply having multiple lithium secondary batteries may particularly be termed a "battery module". A battery module can be used as the power supply of an electric vehicle or an electric storage system for household use. For safety concerns, a cooler may be provided in the battery module in addition to the lithium secondary battery and control device.

In the case where the present embodiment is applied to a vehicle such as an electric vehicle, the vehicle may have a body and a prime mover for driving the body, such that the prime mover includes an electric motor which is driven by the lithium secondary battery. In the case of an electric motor, it suffices if the lithium secondary battery can be charged or discharged so that the discharge end voltage is within the aforementioned range. As the prime mover, only an electric motor to be driven with the secondary battery may be included (electric vehicle), or an electric motor to be driven with the secondary battery and an internal combustion engine may be included (hybrid car). The vehicle may be an ordinary car such as a sedan type or a wagon type, a subcompact car, a motorcycle, or the like.

As described later in embodiments, the discharge end potential of the positive electrode at the end of the discharge of the lithium secondary battery may be switchable between two or more potentials. Owing to this, it can be selected when necessary whether to perform the discharge in a mode in which the discharge end potential is high or to perform the discharge in a mode in which the discharge end potential is lower than in the above mode. Specifically, the charge/discharge may be switchable between the first charge/discharge in which the discharge is finished when the discharge potential of the positive electrode reaches a level equal to or lower than a first potential, which is no less than 2.7 V and no more than 3.4 V on a lithium metal basis, and second charge/discharge in which the discharge is finished when the discharge potential of the positive electrode reaches a second potential which is lower than the first potential.

In each type of charge/discharge, the discharge may be finished when the battery voltage reaches a prescribed threshold voltage, instead of the discharge end potential of the positive electrode. For example, the charge/discharge may be switchable between first charge/discharge, in which the discharge is finished when the battery voltage reaches the first threshold voltage at which the discharge potential of the positive electrode on a lithium metal basis is no less than 2.7 V and no more than 3.4 V, and second charge/discharge, in which the discharge is finished when the battery voltage reaches a second threshold voltage which is lower than the first threshold voltage. In the case where the negative-electrode active material contains graphite, the first threshold voltage VDc1 is, for example, more than 2.5 V and no more than 3.2 V. The switching of the threshold voltage at which the discharge is to be finished can be made by threshold voltage switching means provided in the charge/discharge system.

The switching between the first charge/discharge and the second charge/discharge may be performed by the user of the device when necessary. Alternatively, the discharge control section may be structured to automatically switch the first charge/discharge to the second charge/discharge or vice versa based on a condition which is input in advance. Owing to such a structure, the charge/discharge cycle characteristics of the lithium secondary battery can be improved to a certain extent in accordance with the application or the state of use of the device.

### (EXAMPLE 1)

In order to study the relationship between the discharge end potential of the positive-electrode active material during charge/discharge and the charge/discharge reversibility, the inventors have produced cells for evaluation, which were subjected to evaluation tests. Hereinafter, the methods and results thereof will be described.

### (1-1) Production of positive-electrode active materials A, B and C

As the positive-electrode active material, three kinds of nickel-type lithium-containing complex oxides of different compositions were produced. Specifically, positive-electrode active material A having a composition expressed as LiNi_{0.815}Co_{0.15}Al_{0.035}O₂, positive-electrode active material B having a composition expressed as LiNi_{0.76}Co_{0.14}Al_{0.10}O₂, positive-electrode active material C having a composition expressed as LiNi_{1/3}Mn_{1/3}Co_{1/3}O₂ were produced.

A method of producing positive-electrode active material A is described below.

First, an aqueous solution containing nickel sulfate at a concentration of 0.815 mol/l, an aqueous solution containing cobalt sulfate at a concentration of 0.15 mol/l, and an aqueous solution containing aluminum sulfate at a concentration of 0.035 mol/l were prepared and mixed. Next, the mixed aqueous solution was continuously supplied into a reaction vessel. Thereafter, while adding sodium hydroxide to the reaction vessel dropwise so that the aqueous solution in the reaction vessel would be maintained at a pH between 10 and 13, a precursor of the active material was synthesized. The resultant precursor was washed well with water, and dried. In this manner, a hydroxide expressed as Ni_{0.815}Co_{0.15}Al_{0.035}(OH)₂ was obtained as the precursor.

The resultant precursor and lithium carbonate were mixed so that lithium, cobalt, nickel, and aluminum would have a molar ratio (Ni:Co:Ni:Al) of 1:0.815:0.15:0.035. In an oxygen atmosphere, the mixture was prebaked at a temperature of 500°C for 7 hours, and pulverized. Next, the pulverized bake was again baked at a temperature of 800°C for 15 hours. After the bake was pulverized, it was subjected to a size classification, whereby positive-electrode active material A was obtained.

A method of producing positive-electrode active material B is described below.

First, an aqueous solution containing nickel sulfate at a concentration of 0.76 mol/l, an aqueous solution containing cobalt sulfate at a concentration of 0.14 mol/l, and an aqueous solution containing aluminum sulfate at a concentration of 0.10 mol/l were prepared and mixed. Next, the mixed aqueous solution was continuously supplied into a reaction vessel. While adding sodium hydroxide into the reaction vessel dropwise so that the aqueous solution in the reaction layer would be maintained at a pH between 10 and 13, a precursor of the active material was synthesized. The resultant precursor was washed well with water, and dried. In this manner, a hydroxide expressed as Ni_{0.76}Co_{0.14}Al_{0.10}(OH)₂ was obtained as the precursor.

The resultant precursor and lithium carbonate were mixed so that lithium, cobalt, nickel, and aluminum would have a molar ratio of 1:0.76:0.14:0.10. In an oxygen atmosphere, the mixture was prebaked at a temperature of 500°C for 7 hours, and pulverized. Next, the pulverized bake was again baked at a temperature of 800°C for 15 hours. After the bake was pulverized, it was subjected to a size classification, whereby positive-electrode active material B was obtained.

A method of producing positive-electrode active material C is described below.

First, an aqueous solution containing nickel sulfate, manganese sulfate and cobalt sulfate at an equal concentration was continuously supplied into a reaction vessel. Thereafter, while adding sodium hydroxide to the reaction vessel dropwise so that the aqueous solution in the reaction vessel would be maintained at a pH between 10 and 13, a precursor of the active material was synthesized. The resultant precursor was washed well with water, and dried. As a result, a hydroxide expressed as Ni_{1/3}Mn_{1/3}Co_{1/3}(OH)₂ was obtained as the precursor. The resultant precursor and lithium carbonate were mixed so that lithium, nickel, cobalt, and manganese would have a molar ratio of 3:1:1:1. In an oxygen atmosphere, the mixture was prebaked at a temperature of 500°C for 7 hours, and pulverized. Next, the pulverized bake was again baked at a temperature of 800°C for 15 hours. After the bake was pulverized, it was subjected to a size classification, whereby positive-electrode active material C expressed by chemical formula LiNi_{1/3}Mn_{1/3}Co_{1/3}O₂ was obtained.

### (1-2) Production of working electrodes

Working electrodes were produced by respectively using the aforementioned positive-electrode active materials A, B and C.

A method of producing a working electrode by using positive-electrode active material A is described below.

First, to 100 g of a powder of positive-electrode active material A obtained by the method described in (1-1) above, 2 g of acetylene black (conductive agent), 2 g of artificial graphite (conductive agent), 3 g of polyvinylidene fluoride powder (binder agent), and 50 ml of an organic solvent (NMP) were mixed well, thus preparing a paste mixture. This paste mixture was applied on one face of an aluminum foil (positive-electrode current collector) having a thickness of 15 µm. By drying the paste mixture, a positive-electrode active material layer was obtained.

Thereafter, the aluminum foil having the positive-electrode active material layer formed thereon was subjected to rolling, thereby forming a working electrode. The thickness of the working electrode, i.e., a total thickness of the current collector and the positive-electrode active material layer, was 65 µm, and the working electrode capacity per unit area was 3.0 mAh/cm². Note that this working electrode capacity is a capacity of the case where constant-current charging and discharging was conducted under conditions such that charge current value: 0.1 mA/cm²; end voltage: 4.25 V; discharge current value: 0.1 mA/cm²; end voltage: 3.0 V, by using a lithium metal as a counter electrode.

Next, a method of producing a working electrode by using positive-electrode active material B is described below.

First, to 100 g of a powder of positive-electrode active material B obtained by the method described in (1-1) above, 5 g of acetylene black (conductive agent), 3 g of synthetic polyvinylidene fluoride powder (binder agent), and 50 ml of an organic solvent (NMP) were mixed well, thus preparing a paste mixture. This paste mixture was applied on one face of an aluminum foil (positive-electrode current collector) having a thickness of 15 µm. By drying the paste mixture, a positive-electrode active material layer was obtained.

Thereafter, the aluminum foil having the positive-electrode active material layer formed thereon was subjected to rolling, thereby forming a working electrode. The thickness of the working electrode, i.e., a total thickness of the current collector and the positive-electrode active material layer, was 51 µm, and the working electrode capacity per unit area was 1.6 mAh/cm². Note that this working electrode capacity is a capacity of the case where constant-current charging and discharging was conducted under conditions such that charge current value: 0.1 mA/cm²; end voltage: 4.25 V; discharge current value: 0.1 mA/cm²; end voltage: 3.0 V, by using a lithium metal as a counter electrode.

Next, a method of producing a working electrode by using positive-electrode active material C is described below.

First, to 100 g of a powder of positive-electrode active material C obtained by the method described above, tetrafluoroethylene dispersion 3 g of acetylene black (conductive agent), a aqueous dispersion of tetrafluoroethylene containing 4 g of tetrafluoroethylene (binder agent), and 50 ml of pure water were mixed well, thus preparing a paste mixture. This paste mixture was applied on one face of an aluminum foil (positive-electrode current collector) having a thickness of 15 µm. By drying the paste mixture, a positive-electrode active material layer was obtained.

Thereafter, the aluminum foil having the positive-electrode active material layer formed thereon was subjected to rolling, thereby forming a working electrode. The thickness of the working electrode, i.e., a total thickness of the current collector and the positive-electrode active material layer, was 64 µm, and the working electrode capacity per unit area was 3.1 mAh/cm². Note that this working electrode capacity is a capacity of the case where constant-current charging and discharging was conducted under conditions such that charge current value: 0.1 mA/cm²; end voltage: 4.25 V; discharge current value: 0.1 mA/cm²; end voltage: 3.0 V, by using a lithium metal as a counter electrode.

### (1-3) Production of a counter electrode

In evaluation cells in this example, substantially the same counter electrodes as each other were used regardless of the kind of positive-electrode active material. A method of producing a counter electrode is described below.

As an active material of the counter electrode, 100 g of artificial graphite, 2.5 g of "BM-400B (trade name)" manufactured by ZEON CORPORATION (an aqueous dispersion containing 40 by weight % of denatured styrene-butadiene copolymer) as a binder agent, 1 g of CMC as a thickener, and an appropriate amount of water were agitated in a planetary mixer, thus preparing a paste mixture. This paste mixture was applied on one face of an electrolytic copper foil having a thickness of 10 µm. Thereafter, the paste mixture was dried, whereby an active material layer of a counter electrode was obtained.

Next, the electrolytic copper foil having the active material layer formed thereon was subjected to rolling, whereby a counter electrode having a thickness of 80 µm was obtained. In order to evaluate the performance of the working electrode, the capacity of the counter electrode was made greater than the capacity of the working electrode. Specifically, the counter electrode capacity per unit area was 4.1 mAh/cm². Note that this counter electrode capacity is a capacity of the case where constant-current charging and discharging was conducted under conditions such that charge current value: 0.1 mA/cm²; end voltage: 0 V; discharge current value: 0.1 mA/cm²; end voltage: 1.5 V, by using a lithium metal for the counter electrode.

In evaluation tests described later, an amount of lithium equivalent to 0.5 mAh/cm² was allowed to be electrochemically occluded onto the counter electrode in advance, so that the discharge end voltage of the cell for evaluation would not be affected by changes in the discharge potential of the counter electrode. Note that "electrochemical occlusion of lithium" was performed as follows. Apart from the evaluation cell, a cell for preliminary charging was produced. In the cell for preliminary charging, the counter electrode of the evaluation cell was used as the working electrode, and a lithium metal was used as the counter electrode. By only conducting charging on the cell for preliminary charging, lithium was allowed to be occluded by the working electrode (i.e., the counter electrode of the evaluation cell). As a result, in the late stage of discharge, the point at which the potential of the counter electrode rises can be made sufficiently later than the point at which the potential of the working electrode has a large fall. As a result, in the evaluation tests, the potential of the counter electrode can be kept substantially constant.

### (1-4) Construction and method of production of evaluation cells

In this example, as an evaluation cell, a stacked-type cell including an electrode group which is composed of a positive electrode, a separator, and a negative electrode provided in a stacked manner is used.

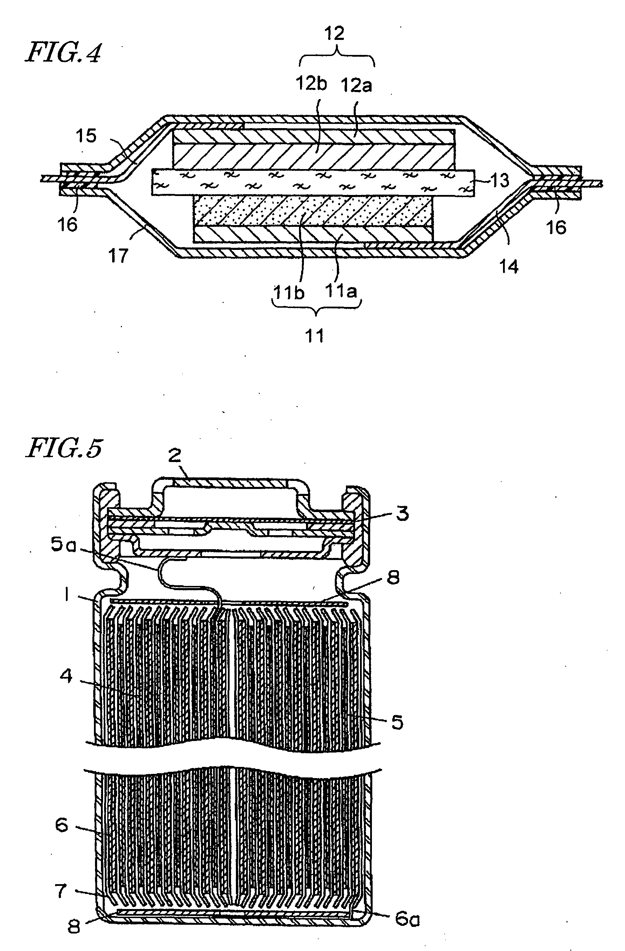

FIG. **4** is a cross-sectional view schematically showing a construction of the evaluation cell used in this example.

The evaluation cell includes a positive electrode **11,** a negative electrode **12,** a separator **13,** a positive electrode lead **14,** a negative electrode lead **15,** a gasket **16,** and an outer case **17.** Herein, the working electrode produced in (1-2) above is used as the positive electrode **11,** and the counter electrode produced in (1-3) above is used as the negative electrode **12.** The positive electrode **11** includes a positive-electrode current collector **11a** and a positive-electrode active material layer **11b,** whereas the negative electrode **12** includes a negative-electrode current collector **12a** and a negative-electrode active material layer **12b.** The separator **13** is disposed between the positive-electrode active material layer **11b** and the negative-electrode active material layer **12b.** The positive electrode lead **14** is connected to the positive-electrode current collector **11a,** and the negative electrode lead **15** is connected to the negative-electrode current collector **12a.** The electrode group composed of the positive electrode **11,** the negative electrode **12,** and the separator **13** is contained in the outer case **17** together with an electrolyte.

Next, a method of producing the evaluation cells is described.

The working electrode in which positive-electrode active material A was used was cut into a size of 20 mm × 20 mm, whereby the positive electrode **11** was obtained. Similarly, the counter electrode obtained in (1-3) above was cut into 20 mm×20 mm, whereby the negative electrode **12** was obtained. Next, to portions of the current collectors **11a** and **12a** of the positive electrode **11** and the negative electrode **12** where the active material layers **11b** and **12b** were not formed, the leads **14** and **15** were welded, respectively.

Thereafter, the positive electrode **11,** the separator **13,** and the negative electrode **12** were stacked so that the positive-electrode active material layer **11b** and the negative-electrode active material layer **12b** would be opposed to each other while having the separator (polyethylene microporous film) **13** therebetween, thus producing an electrode group. Together with 0.5 g of electrolyte, this electrode group was inserted into the outer case **17** made of an aluminum laminate. As the electrolyte, in a solvent mixture in which ethylene carbonate (EC), ethyl methyl carbonate (EMC), and diethyl carbonate (DEC) were mixed at a volume ratio of EC:EMC:DEC=2:3:5, LiPF₆ was dissolved to a concentration of 1.0 mol/L. Thereafter, vinylene carbonate was further added with a weight ratio of 2%, whereby the electrolyte solution was obtained.

Next, a lithium metal was prepared as a reference electrode. The reference electrode (not shown) was placed in the neighborhood of the positive electrode **11** in the outer case **17.** The working electrode lead, the counter electrode lead, and the reference electrode lead were allowed to extend outside the outer case **17** through openings of the outer case **17.** Thereafter, the openings of the outer case **17** were welded while vacuuming the interior of the outer case **17.** In this manner, the evaluation cell (hereinafter referred to as "evaluation cell A") in which positive-electrode active material A was used was produced.

With a method similar to the above, evaluation cells were produced whose positive electrodes **11** were working electrodes in which the positive-electrode active materials B and C were used respectively. These evaluation cells are referred to as "evaluation cell B" and "evaluation cell C".

### (1-5) Evaluations of initial capacity and charge/discharge reversibility

Next, evaluation cells A, B and C were subjected to charge/discharge tests to examine the relationship of the discharge end potential of the working electrode with respect to the initial capacity and charge/discharge reversibility. Herein, Tests 1 to 7 were conducted by using evaluation cell A, Test 8 was conducted by using evaluation cell B, and Tests 9 to 11 were conducted by using evaluation cell C.

The evaluation conditions and results of Tests 1 to 7 are shown below.

### (i) Tests 1 to 7 (evaluation cell A)

First, a first cycle of charge/discharge was conducted under the following conditions.

### <Conditions of initial capacity evaluation>

constant-current charging: 8 mA; end voltage: 4.2 V
constant-voltage charging: end current: 0.3 mA; pause time: 20 minutes
constant-current discharging: 2.4 mA; end voltage (as shown in Table 1); pause time: 20 minutes
test temperature: as shown in Table 1

After conducting the first cycle of charge/discharge, a discharge capacity per active material weight of the positive electrode (working electrode) in the first cycle of charge/discharge was calculated, which was defined as a "capacity of use (mAh/g)". The capacities of use are shown in Table 1.

Moreover, the lithium contents in positive-electrode active material A at the end of the charge and at the end of the discharge (discharge end), i.e., the x values in the composition LiₓNi_{0.815}Co_{0.15}Al_{0.035}O₂ of positive-electrode active material A, were examined. The x values at the discharge end are shown in Table 1. In all of Tests 1 to 7, the x value at the end of the charge was 0.232.

Next, the discharge current value was increased, and second and subsequent cycles of charge/discharge were conducted under the following conditions.

### <Conditions of charge/discharge reversibility evaluation>

constant-current charging: 8 mA; end voltage: 4.2 V
constant-voltage charging: end current: 0.3 mA; pause time: 20 minutes
constant-current discharging: 12 mA; end voltage (as shown in Table 1); pause time: 20 minutes
test temperature: as shown in Table 1

After repeating charge/discharge under the above conditions, a value obtained by dividing the amount of capacity decrease at an n^{th} cycle by the cycle number n was calculated and defined as a "capacity deterioration rate (%/cycle)". In Tests 1 to 5 and 7, a capacity deterioration rate at the 500^{th} cycle (n=500) was determined. In Test 6, evaluation cell A had such a large deterioration that charge/discharge could not be repeated as many times as 500 cycles. Therefore, a capacity deterioration rate (n=150) at the 150^{th} cycle was determined. The results are shown in Table 1.

### (ii) Test 8 (evaluation cell B)

First, a first cycle of charge/discharge was conducted under the following conditions.

### <Conditions of initial capacity evaluation>

constant-current charging: 4 mA; end voltage: 4.2 V
constant-voltage charging: end current: 0.15 mA; pause time: 20 minutes
constant-current discharging: 1.2 mA; end voltage: 3.0 V; pause time: 20 minutes
test temperature: 45°C

After conducting the first cycle of charge/discharge, "a capacity of use (mAh/g)" was calculated like in Tests 1 to 7, which is shown in Table 1.

Moreover, the lithium contents in positive-electrode active material B at the end of the charge and at the end of the discharge (discharge end), i.e., the x values in the composition LiₓNi_{0.76}Co_{0.14}Al_{0.10}O₂ of positive-electrode active material B, were examined. The x value at the discharge end is shown in Table 1. In Test 8, the x value at the end of the charge was 0.230.

Next, the discharge current value was increased, and second and subsequent cycles of charge/discharge were conducted under the following conditions.

### <Conditions of charge/discharge reversibility evaluation>

constant-current charging: 4 mA; end voltage: 4.2 V
constant-voltage charging: end current: 0.15 mA; pause time: 20 minutes
constant-current discharging: 6 mA; end voltage: 3.0 V; pause time: 20 minutes
test temperature: 45°C

After repeating charge/discharge under the above conditions, a capacity deterioration rate at the 500^{th} cycle (n=500) was determined, which is shown in Table 1.

### (iii) Tests 9 to 11 (evaluation cell C)

A first cycle of, and second and later cycles of, charge/discharge were conducted under substantially the same conditions as those of Tests 1 to 7. The "capacity of use (mAh/g)" after the first cycle of charge/discharge and the capacity deterioration rate at the 500^{th} cycle (n=500) were found and are shown in Table 1.

**Table 1**

| Test No. | Evaluation cell | Discharge end voltage of battery (V) | Discharge end potential of working electrode (V) | x value at discharge end | Test temperature | Capacity of use (mAh/g) | Capacity deterioration rate (%/cycle number) |
|---|---|---|---|---|---|---|---|
| 1 | A | 3.2 | 3.35 | 0.935 | 45°C | 189 | 0.040 |
| 2 | A | 3.0 | 3.16 | 0.938 | 45°C | 196 | 0.044 |
| 3 | A | 2.75 | 2.96 | 0.950 | 45°C | 200 | 0.046 |
| 4 | A | 2.5 | 2.65 | 0.960 | 45°C | 202 | 0.057 |
| 5 | A | 2.0 | 2.31 | 0.973 | 45°C | 206 | 0.102 |
| 6 | A | 1.5 | 1.75 | 1.016 | 45°C | 218 | 0.422 |
| 7 | A | 2.5 | 2.68 | 0.921 | 25°C | 191 | 0.056 |
| 8 | 8 | 3.0 | 3.20 | 0.888 | 45°C | 172 | 0.043 |
| 9 | C | 3.0 | 3.16 | 0.948 | 45°C | 158 | 0.040 |
| 10 | C | 2.5 | 2.65 | 0.959 | 45°C | 161 | 0.045 |
| 11 | C | 1.5 | 1.75 | 0.966 | 45°C | 163 | 0.100 |

As can be seen from the results of Table 1, as the discharge end potential of the working electrode increases, the capacity deterioration rate decreases, but the capacity of use of the positive-electrode active material decreases. Conversely, as the discharge end potential decreases, the capacity of use of the positive-electrode active material increases, but the capacity deterioration rate increases. It was also found that, in a potential region with large changes in the discharge potential and little change in the capacity of use (in FIG. **2****,** the potential region of equal to or lower than 3.4 V), the capacity deterioration rate significantly changes with the discharge end potential.

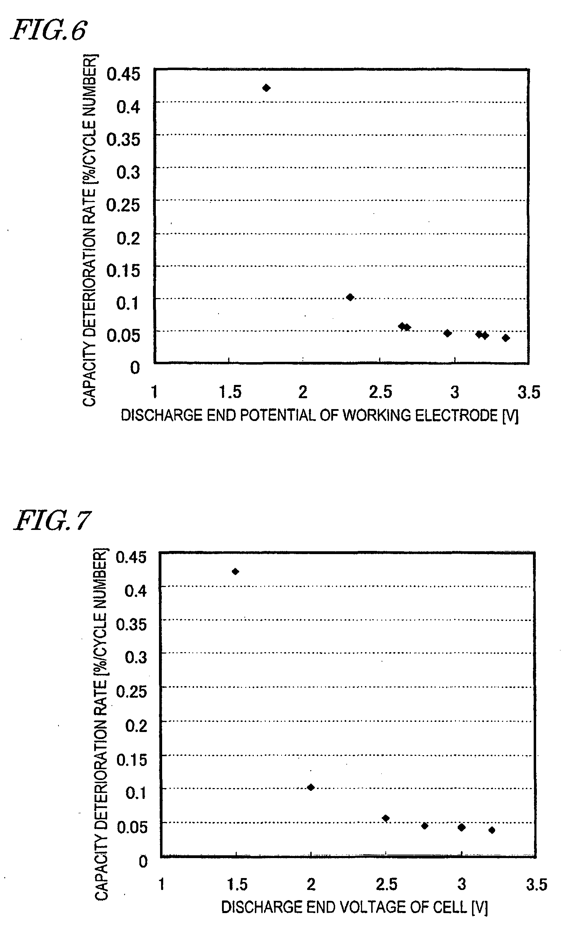

FIG. **6** is a graph showing the relationship between the discharge end potential of the working electrode and the capacity deterioration rate in evaluation cells A and B (Tests 1 to 8). FIG. **7** is a graph showing the relationship between the discharge end potential and the capacity deterioration rate of evaluation cells A and B (Tests 1 to 8). As can be seen from FIGS. **6** and **7****,** when the discharge end potential becomes lower than 2.7 V, or when the discharge end potential of the cell becomes lower than 2.5 V, the capacity deterioration rate drastically increases. Although not shown, substantially the same tendency is also seen in evaluation cell C (Tests 9 to 11).

On the other hand, as can be seen from the graph shown in FIG. **2****,** a sufficient capacity of use is guaranteed when the discharge end potential is equal to or lower than 3.4 V. It was also found from Test 1 that in order to make the discharge end potential equal to or lower than 3.4 V, the discharge end potential of the cell needs to be controlled to be equal to or lower than 3.2 V.

Thus, it was confirmed that, by setting the discharge end potential of the positive-electrode active material to be no less than 2.7 V and no more than 3.4 V, the capacity deterioration rate of the cell can be lowered while maintaining the capacity of use at a certain level. In the case of the cells used in this example, it was found that, by controlling the discharge end potential of the cell to be more than 2.5 V and no more than 3.2 V, the discharge end potential of the positive-electrode active material can be controlled to be within the above-described range.

### (EMBODIMENT 2)

Hereinafter, Embodiment 2 according to the present invention will be described with reference to the drawings. This embodiment regards a charge/discharge method using a wound-type lithium secondary battery.

First, a structure of the lithium secondary battery in this embodiment will be described.

FIG. **5** is a schematic cross-sectional view showing an example of a lithium secondary battery of the present embodiment.

The lithium secondary battery includes a battery case **1**, an electrode group **4** accommodated in the battery case **1,** and insulation rings **8** respectively disposed above and below the electrode group **4.** The battery case **1** has an upper opening, the opening being sealed with a sealing plate **2.**

The electrode group **4** is constructed so that a positive electrode **5** and a negative electrode **6** are wound a plurality of times in spirals while having a separator **7** therebetween. A positive electrode lead **5a** of e.g. aluminum extends from the positive electrode **5,** whereas a negative electrode lead **6a** of e.g. copper extends from the negative electrode **6.** The positive electrode lead **5a** is connected to the sealing plate **2** of the battery case **1.** The negative electrode lead **6a** is connected to the bottom of the battery case 1. Although not shown, together with the electrode group **4,** an electrolyte solution is injected into the interior of the battery case **1.**

Such a lithium secondary battery is produced as follows. First, the negative electrode **6** and the positive electrode **5** are formed, and are wound together with the separator **63,** thereby forming the electrode group **4.** Next, the respective insulation plates **8** are attached over and under the electrode group **4.** Moreover, the positive electrode lead **5a** extending from the positive electrode **4** is welded to the sealing plate **66,** and the negative electrode lead **6a** extending from the negative electrode **6** is welded to the bottom of the battery case **1;** and these are inserted into the battery case **1.** Thereafter, a nonaqueous electrolyte (not shown) which conducts lithium ions is injected into the battery case **1,** and the opening of the battery case **1** is sealed with the sealing plate **2,** with an insulation packing **3** being held inner to the sealing plate **2.**

The positive electrode **5** in the present embodiment includes a positive-electrode current collector and a positive electrode mixture layer formed on the surface of the positive-electrode current collector.

The positive-electrode current collector may be a metal foil of aluminum or the like, a metal foil that has been subjected to lathing or etching, etc., for example. As the material of the positive-electrode current collector, those which are routinely used in the field can be used. For example, a metal material such as stainless steel, titanium, or aluminum can be used.

The positive electrode mixture layer is formed on one face or both faces of the positive-electrode current collector by the following method, for example. First, a positive electrode mixture paste is produced by allowing a positive-electrode active material, a binder agent, a conductive agent, and optionally a thickener to be kneaded and dispersed in a solvent. Next, the positive electrode mixture is applied onto the surface of the positive-electrode current collector, and then dried to produce a positive electrode mixture layer. Then, the positive-electrode current collector with the positive electrode mixture layer formed thereon is subjected to rolling. Thus, the positive electrode **5** is obtained. The thickness of the positive electrode **5** (total thickness of the positive electrode mixture layer and the current collector) is 100 µm to 200 µm, for example. Moreover, it is preferable that the positive electrode **5** is flexible.

As the positive-electrode active material, the positive electrode mixture layer in the present embodiment contains a nickel-type lithium-containing complex oxide that is capable of occluding and releasing lithium. A preferable composition of the nickel-type lithium-containing complex oxide is the same as the composition described in Embodiment 1.

There are no particular limitations as to the binder agent to be used for the positive electrode mixture layer, so long as it is a material which is stable with respect to the solvent and electrolyte solution used. For example, a fluorine-based binder agent, an acrylic rubber, a modified acrylic rubber, styrene-butadiene rubber (SBR), isopropylene rubber, butadiene rubber, an acrylic polymer, a vinyl-based polymer, or the like may be used by itself, or two or more of them may be used in a mixture or copolymer. As the fluorine-based binder agent, for example, polyvinylidene fluoride (PVDF), a copolymer of vinylidene fluoride (VDF) and hexafluoropropylene (HFP) (P(VDF-HFP)), a dispersion of polytetrafluoroethylene resin, or the like can be preferably used.

As the thickener, carboxymethyl cellulose, methyl cellulose, hydroxymethyl cellulose, ethyl cellulose, polyvinyl alcohol, oxidized starch, phosphated starch, casein, or the like may be preferably used.

As the conductive agent, acetylene black, artificial graphite, natural graphite, carbon fiber, or the like may be used by itself, or two or more of them may be used in a mixture.

There are no particular limitations as to the solvent, so long as the binder agent can be dissolved into the solvent. In the case of using an organic-based binder agent, an organic solvent such as N-methyl-2-pyrrolidone (NMP), N,N-dimethylformamide, tetrahydrofuran, dimethylacetamide, dimethyl sulfoxide, hexamethyl sulfonamide, tetramethylurea, acetone, or methyl ethyl ketone can be used, for example. Any such organic solvent may be used by itself, or a mixed solvent containing two or more of these may be used. In the case of using an aqueous binder agent, it is preferable to use water or hot water as the solvent.

The negative electrode **6** in the present embodiment includes a negative-electrode current collector and a negative electrode mixture layer formed on the surface of the negative-electrode current collector.

As the negative-electrode current collector, a rolled-out foil, an electrolytic foil, etc. of copper or a copper alloy can be used, for example. There are no particular limitations as to the shape of the negative-electrode current collector; other than foils, holed foils, expanded materials, lath materials, or the like may be used. The negative-electrode current collector is preferably as thick as possible because the tensile strength will increase. The thickness of the negative-electrode current collector is no less than 8 µm, for example. On the other hand, if the negative-electrode current collector becomes too thick, the volume of voids in the interior of the battery case becomes small, thus possibly lowering the energy density. Therefore, the thickness of the negative-electrode current collector is preferably no more than 20 µm, and more preferably no more than 15 µm.

The negative electrode mixture layer is formed on one face or both faces of the negative-electrode current collector by the following method, for example. First, a negative electrode mixture paste is produced by allowing a negative-electrode active material, a binder agent, and optionally a thickener and a conductive aid to be kneaded and dispersed in a solvent. Next, the negative electrode mixture is applied onto the surface of the negative-electrode current collector, and then dried to produce the negative electrode mixture layer. Then, the negative-electrode current collector with the negative electrode mixture layer formed thereon is subjected to rolling. Thus, the negative electrode **6** is obtained. The thickness of the negative electrode **6** (total thickness of the negative electrode mixture layer and the current collector) is 100 µm to 210 µm, for example. Moreover, it is preferable that the negative electrode **6** is flexible.

There are no particular limitations as to the material used as the negative-electrode active material. For example, any of carbon materials obtained by baking organic polymeric compounds (phenol resin, polyacrylonitrile, cellulose, etc.), carbon materials obtained by baking coke or pitch, artificial graphite, natural graphite and the like is preferably usable. There are no particular limitations as to the shape of these materials. These materials may be spherical, scaly or massive.

As the conductive aid to be used for the negative electrode mixture layer, any of the conductive agents mentioned above as being usable for the positive electrode mixture can be used.

There are no particular limitations as to the method of producing paste mixtures of the positive electrode and the negative electrode. For example, a positive electrode or negative-electrode active material, a binder agent, and the optionally-added conductive agent or conductive aid can be kneaded and dispersed in a solvent by using a planetary mixer, a homomixer, a pin mixer, a kneader, a homogenizer, or the like. Any such method of production may be used by itself or in combination. Furthermore, when kneading and dispersing them in the solvent, various dispersants, surfactants, stabilizers, or the like may be optionally added.

There are no particular limitations as to the method of applying and drying the mixture (application-drying). A paste mixture which is kneaded and dispersed in a solvent can be easily applied onto the current collector surface by using a slit die coater, a reverse roll coater, a lip coater, a blade coater, a knife coater, a gravure coater, a dip coater, or the like, for example. The applied mixture may be dried by a method which is close to natural drying. From the perspective of producibility, it is preferable to carry out drying at a temperature from 70°C to 200°C.

There are no particular limitations as to the method of rolling the current collector having the mixture layer formed thereon. For example, using a roll press machine, rolling may be performed a plurality of times with a line pressure of 1000 to 2000 kg/cm, until the mixture layer attains a predetermined thickness. Alternatively, rolling may be performed a plurality of times with different line pressures.

As the separator 7, a microporous film or nonwoven fabric of a polyolefin resin, such as polyethylene resin or polypropylene resin, can be used. The microporous film or nonwoven fabric may be a single layer, or have a multilayer structure. Preferably, a separator having a two-layer structure formed of a polyethylene resin layer and a polypropylene resin layer, or a three-layer structure formed of two polypropylene resin layers and a polyethylene resin layer interposed between them, is used. It is preferable that any such separator has a shutdown function. The separator 7 preferably has a thickness of no less than 10 µm and no more than 30 µm, for example.

The nonaqueous electrolyte contains a nonaqueous solvent and an electrolyte. The nonaqueous solvent contains a cyclic carbonate and a chain carbonate as main components, for example. Preferably, the cyclic carbonate is at least one kind selected from ethylene carbonate (EC), propylene carbonate (PC), and butylene carbonate (BC). It is preferable that the chain carbonate is at least one kind selected from dimethyl carbonate (DMC), diethyl carbonate (DEC), ethyl methyl carbonate (EMC), and the like. The electrolyte contains a lithium salt which is strongly electron-withdrawing, for example. As such a lithium salt, LiPF₆, LiBF₄, LiClO₄, LiAsF₆, LiCF₃SO₃, LiN(SO₂CF₃)₂, LiN(SO₂C₂F₅)₂, LiC(SO₂CF₃)₃, or the like can be used, for example. One kind of these electrolytes may be used by itself, or two or more kinds of them may be used in combination. It is also preferable that these electrolytes are dissolved in the aforementioned nonaqueous solvent at a concentration of 0.5 to 1.5M.

The nonaqueous electrolyte solution may contain a polymer material. For example, a polymer material which is capable of gelating a liquid substance can be used. As the polymer material, those which are routinely used in the field can be used, e.g., polyvinylidene fluoride, polyacrylonitrile, and polyethylene oxide.

In this embodiment also, charge/discharge of the positive electrode is conducted by a method substantially the same as that in Embodiment 1. Namely, when the discharge potential of the positive electrode reaches a level in the range of no less than 2.7 V and no more than 3.4 V, the discharge is finished. Owing to this, the decrease in charge/discharge cycle characteristics can be suppressed while ensuring the battery capacity.

Although not shown, the lithium secondary battery in this embodiment may include a reference electrode. When the reference electrode is included, the positive electrode potential on a lithium metal basis can be detected based on the potential difference between the positive electrode and the negative electrode, and therefore deterioration of the positive electrode can be suppressed more effectively.

### (EXAMPLE 2)

A cylindrical evaluation cell (referred to as "evaluation cell D") was produced in which LiNi_{0.815}Co_{0.15}Al_{0.035}O₂ was used as the positive-electrode active material, and was subjected to charge/discharge cycle characteristics evaluation. The methods and results thereof will be described below.

### (2-1) Production of a positive electrode

In an organic solvent (NMP), to 100 g of LiNi_{0.815}Co_{0.15}Al_{0.035}O₂ powder, 1.25 g of acetylene black (conductive agent), 1.25 g of artificial graphite (conductive agent), and 2.7 g of polyvinylidene fluoride powder (binder agent) were mixed well, thus preparing a paste mixture. This paste mixture was applied on one face of an aluminum foil (positive-electrode current collector) having a thickness of 15 µm, and thereafter dried to form a positive electrode mixture layer. Next, the positive-electrode current collector having the positive electrode mixture layer formed thereon was subjected to rolling, whereby a positive electrode having a thickness (total thickness of the positive-electrode current collector and the positive electrode mixture layer) of 128 µm was obtained.

### (2-2) Production of a negative electrode

Artificial graphite and natural graphite were mixed at a weight ratio of 60:40, thus preparing a negative-electrode active material. To 100 g of this negative-electrode active material, 0.6 g of a rubber-based binder (binder agent) and 1.0 g of carboxymethyl cellulose (thickener) were mixed well, thus preparing a paste mixture. This paste mixture was applied on one face of a copper foil (negative-electrode current collector) having a thickness of 8 µm, and thereafter dried to form a negative electrode mixture layer. Next, the negative-electrode current collector having the negative electrode mixture layer formed thereon was subjected to rolling, whereby a negative electrode having a thickness (total thickness of the negative-electrode current collector and the negative electrode mixture layer) of 144 µm was obtained.

### (2-3) Production of an electrolyte solution

Ethylene carbonate (EC), ethyl methyl carbonate (EMC), and dimethyl carbonate (DMC) were mixed at a volume ratio of 1:1:8, thus producing a solvent mixture. Next, LiPF₆ was dissolved in the solvent mixture to a concentration of 1.4 mol/L. Thereafter, vinylene carbonate was further added with a weight ratio of 16%, whereby an electrolyte solution was obtained.

### (2-4) Production of evaluation cell D

By using the positive electrode and the negative electrode obtained by the above methods, a cylindrical-shaped lithium secondary battery was produced as an evaluation cell. The evaluation cell had a construction substantially the same as the construction shown in FIG. **5****.**

Hereinafter, referring back to FIG. **5**, the method of production will be described.

First, the positive electrode **5** and the negative electrode **6** were wound a plurality of times in spirals while having a separator (microporous film of polyethylene) **7** therebetween, thus forming a cylindrical-shaped electrode group **4.** On the upper face and lower face of the electrode group **4,** insulation rings **8** were respectively disposed. Next, a positive electrode lead **5a** of aluminum extending from the positive electrode **5** was connected to a sealing plate **2.** A negative electrode lead **6a** of copper extending from the negative electrode **6** was connected to the bottom of a battery case **1.** Thereafter, the electrode group was accommodated in the battery case **1.** Then, the electrolyte solution (not shown) was injected into the battery case **1.** After the injection of the electrolyte solution, an insulation packing **3** was placed in an opening of the battery case **1**, which opening of the battery case **1** was sealed with the sealing plate **2.** Thus, as evaluation cell D, a cylindrical battery 18650 having a diameter of 18 mm and a height of 65 mm was obtained.

The design capacity for evaluation cell D was 2900 mAh.

In this example, evaluation cell D was constructed so that the discharge end voltage thereof would mainly depend on the discharge potential of the positive electrode **5.** Therefore, it is possible to control the discharge end potential of the positive electrode **5** by changing the discharge end voltage of evaluation cell D.

### (2-5) Evaluation of charge/discharge cycle characteristics

Evaluation cell D was subjected to charge/discharge tests to examine the relationship between the discharge end voltage of evaluation cell D (discharge end voltage of the battery) and charge/discharge cycle characteristics thereof. Herein, three kinds of charge/discharge tests (Tests 12 to 14) were conducted by varying the discharge end voltage of evaluation cell D.

The evaluation conditions and results of Tests 12 to 14 are shown below.

### <Evaluation conditions>

constant-current charging: 870 mA; end voltage: 4.2 V
constant-voltage charging: end current: 50 mA; pause time: 20 minutes
constant-current discharging: 2900 mA; end voltage (as shown in Table 2); pause time: 20 minutes
test temperature: 45°C

After a first cycle of the charge/discharge test, the discharge capacity was determined. As the capacity retention rate, after repeating 500 cycles of the aforementioned charge/discharge, a rate of the discharge capacity at the 500^{th} cycle with respect to the discharge capacity at the first cycle was determined. The resultant discharge capacities and capacity retention rates are shown in Table 2. Note that the "capacity ratio" shown in Table 2 is a rate (%) of discharge capacity where the discharge capacity of Test 12 is defined as 100.

### (2-6) Measurement of discharge end potential of the positive electrode

First, apart from evaluation cell D, a cell for potential measurement was produced in order to measure the potential of the positive electrode on a lithium metal basis. The cell for potential measurement was obtained by placing a lithium metal as a reference electrode in a cell having an electrode group including the positive electrode and the negative electrode used for evaluation cell D.

The cell for potential measurement was subjected to charge/discharge tests under the evaluation conditions of Tests 12 to 14, and the discharge end potential of the positive electrode after the first cycle of the charge/discharge test was measured. The measurement results are shown in Table 2.

**[Table 2]**

| Test No. | Evaluation cell | Discharge end voltage of battery (V) | Discharge end potential of positive electrode (V) | Discharge capacity (mAh) (capacity ratio) | Capacity retention rate after 500 cycles (%) |
|---|---|---|---|---|---|
| 12 | C | 3.0 | 3.16 | 2862 (97) | 85 |
| 13 | C | 2.75 | 2.90 | 2930 (99) | 80 |
| 14 | C | 2.5 | 2.65 | 2951 (100) | 72 |

As can be seen from the results shown in Table 2, by increasing the discharge end voltage of the battery, the discharge end potential of the positive electrode was kept high. It was found that as the discharge end potential of the positive electrode increases, the initial discharge capacity slightly decreases, but the charge/discharge cycle life greatly improves. This is presumably because increasing the discharge end potential suppresses deteriorations of the positive electrode through repetitions of charge/discharge.

### (EMBODIMENT 3)

Hereinafter, Embodiment 3 according to the present invention will be described with reference to the drawings.

This embodiment regards a charge/discharge system including a lithium secondary battery and a control circuit therefor. As the lithium secondary battery, the stacked-type or wound-type lithium secondary battery described in Embodiments 1 and 2 (FIG. **4**, FIG. **5**) can be used. There are no limitations as to the form of the lithium secondary battery as long as any of the above-described positive electrodes is used.

The charge/discharge system in this embodiment is widely applicable for mobile compact electronic devices, various electric products including vehicles such as electric vehicles, hybrid cars and the like, and battery packs and battery modules usable for the same.

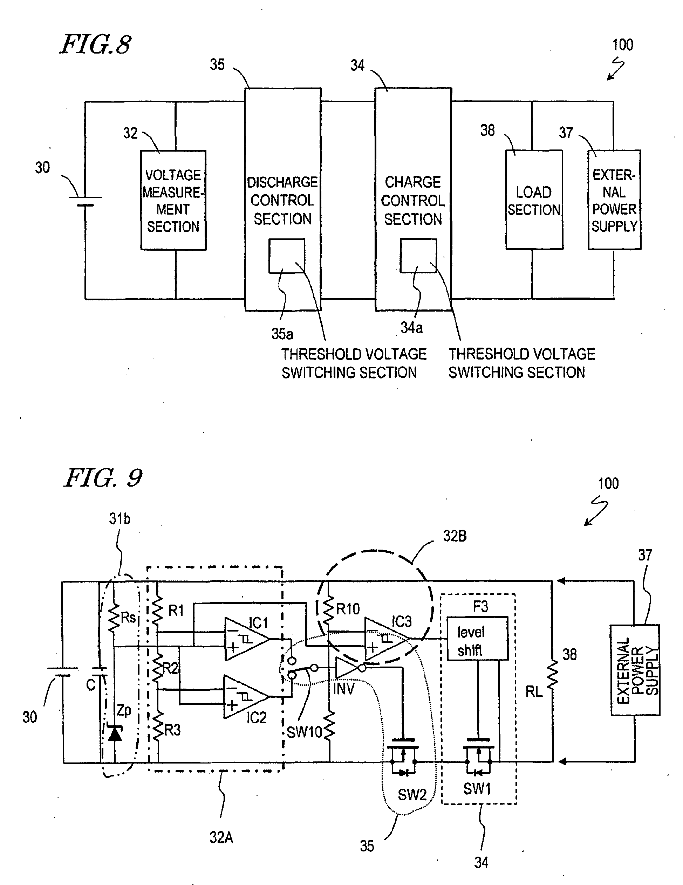

FIG. **8** shows an example of structure of the charge/discharge system in this embodiment.

A charge/discharge system **100** includes a lithium secondary battery **30,** a voltage measurement section **32** for measuring a voltage Vc of the lithium secondary battery **30,** a charge control section **34,** a discharge control section **35,** an external power supply **37,** and a load section **38.** For charging the lithium secondary battery **30,** the charge control section **34** is operated; whereas for discharging the lithium secondary battery **30,** the discharge control section **35** is operated. The charge control section **34** includes a threshold voltage switching section **34a** for switching a threshold voltage VCc for charge of the lithium secondary battery **30.** The discharge control section **35** includes a threshold voltage switching section **35a** for switching a threshold voltage VDc for discharge of the lithium secondary battery **30.** In FIG. **8****,** one lithium secondary battery **30** is shown, but a plurality of lithium secondary batteries may be connected to each other for use.

The discharge control section 35 is connected with the voltage measurement section **32.** During the discharge of the lithium secondary battery **30,** the discharge control section **35** receives a measured value of the voltage Vc from the voltage measurement section **32.** When the measured value of the voltage Vc reaches the voltage VDc selected in advance by the threshold voltage switching means **35a** (discharge end voltage VDc), the discharge control section **35** stops the discharge of the lithium secondary battery **30.**

Similarly, the charge control section **34** is also connected with the voltage measurement section **32.** During the charge of the lithium secondary battery **30,** the charge control section **34** receives a measured value of the voltage Vc from the voltage measurement section **32.** When the measured value of the voltage Vc reaches the voltage VCc selected in advance by the threshold voltage switching means **34a** (charge end voltage VCc), the charge control section **34** stops the charge of the lithium secondary battery **30.**

In the lithium secondary battery **30** in this embodiment, graphite is used as the negative-electrode active material, and a nickel-type lithium-containing complex oxide is used as the positive-electrode active material. The discharge end voltage VDc of the lithium secondary battery **30** has been set to a level more than 2.5 V and no more than 3.2 V. Owing to this, the discharge end potential of the positive electrode is no less than 2.7 V and no more than 3.4 V. Therefore, as in the above-described embodiment, the charge/discharge cycle characteristics can be improved while the decrease in the capacity of the lithium secondary battery **30** is suppressed.

The discharge end voltage VDc of the lithium secondary battery **30** may be switchable by the threshold voltage switching section **35a** of the discharge control section **35.** For example, the discharge end voltage VDc may be set to be switchable between a first threshold voltage VDc1, set to a level in the range of more than 2.5 V and no more than 3.2 V, and a second threshold voltage VDc2 which is lower than the first threshold voltage VDc1. In this case, the lithium secondary battery **30** can be operated in the state where the discharge end voltage VDc is optionally set to the first threshold voltage VDc1 in accordance with the application or the state of use of the electronic device. Therefore, the charge/discharge cycle characteristics of the lithium secondary battery **30** can be improved, and the life thereof can be extended. The second threshold voltage VDc2 may be more than 2.5 V or no more than 2.5 V.

In the charge/discharge system **100** shown in FIG. **8**, the voltage measurement section **32,** the discharge control section **35** and the charge control section **34** may be provided inside the battery back or the battery module including the lithium secondary battery **30.** Alternatively, a control device including the voltage measurement section **32,** the discharge control section **35** and the charge control section **34** may be provided on the electronic device side or the vehicle side.

FIG. **9** is a circuit diagram showing an example of more specific structure of the charge/discharge system **100** in this embodiment.

The circuit shown here includes the lithium secondary battery **30,** a capacitor **C** for stabilizing the battery voltage so as to stabilize the circuit operation, a reference voltage generation section **31** for generating a reference voltage, a discharge voltage measurement section **32A** for measuring a discharge voltage, a charge voltage measurement section **32B** for measuring a charge voltage, the discharge control section **35,** the charge control section **34,** a load resistance **RL,** and the external power supply **37** for charging such as an AC adaptor or the like, which is attached when necessary or always included in the circuit.

The reference voltage generation section **31** includes a resistance **Rs** and a reference voltage generation element **ZD.** The discharge voltage measurement section **32A** includes resistances **R1**, **R2** and **R3** and comparators **IC1** and **IC2.** The charge voltage measurement section **32B** includes resistances **R10** and **R11** and a comparator **IC3.** The discharge control section **35** includes switching means **SW10** for switching the discharge end voltage (threshold voltage for discharge) VDc of the lithium secondary battery **30,** an inverter **INV,** and a discharge block switch **SW2.** The charge control section **34** includes a level shift functional block **F3** and a charge block switch **SW1.**

Here, a method for switching the discharge end voltage VDc will be described in detail, with reference to the circuit shown in FIG. **9** for the sake of simplicity. By adding elements substantially the same as those of the discharge voltage measurement section **32A** and the discharge control section **35** to the charge voltage measurement section **32B** and the charge control section **34** respectively, the threshold voltage VCc for charge can also be made switchable.

The reference voltage generation section **31** is structured to generate, for example, 1.25 V as a reference voltage used for determining the threshold voltage for charge/discharge based on the voltage Vc of the battery.

In the discharge voltage measurement section **32A**, a voltage generated by the reference voltage generation section **31** is applied to a positive terminal of each of the comparators **IC1** and **IC2,** and voltages divided by the resistances **R1**, **R2** and **R3** are applied to negative input terminals of the comparators **IC1** and **IC2.** The comparator **IC1** is designed such that an output thereof is inverted when being supplied with a voltage corresponding to a battery voltage of 2.68 V, and the comparator **IC2** is designed such that an output thereof is inverted when being supplied with a voltage corresponding to a battery voltage of 3.16 V.

The discharge control section **35** switches the comparator to be connected to an input terminal of the inverter **INV** by means of the switching means **SW10.** When the input terminal of the inverter **INV** is connected to the comparator **IC2,** the output of the comparator **IC2** becomes high at the time when the battery voltage (discharge voltage) Vc becomes 3.16 V. As a result, the input of the inverter **INV** is changed to high, and the output thereof is changed to low. When the output of the inverter **INV** becomes low, the voltage between a gate and a source of the discharge block switch **SW2** becomes low, and thus the discharge block switch **SW2** is put into an OFF state. In this way, the current is blocked from flowing to the load resistance **RL** from the lithium secondary battery **30** can be blocked. Therefore, the discharge operation can be finished.

When the input terminal of the inverter **INV** is connected to **IC1** by the switching means **SW10,** the discharge operation can be finished at the time when the battery voltage (discharge voltage) Vc becomes 2.68 V in a manner substantially the same as that described above.

The operation of the charge voltage measurement section **32B** and the charge control section **34** is substantially the same as that of the discharge voltage measurement section **32A** and the discharge control section **35** and will not be described in detail. According to the operation of the charge voltage measurement section **32B** and the charge control section **34,** for example, when the battery voltage (charge voltage) Vc becomes 4.2 V, the output voltage of the comparator **IC3** is inverted and thus the charge block switch **SW1** is put into an OFF state. As a result, the charge operation can be finished.

Like the discharge control section **35**, the charge control section **34** controls the charge block switch **SW1** between an ON state in which a source and a drain thereof are conductive to each other and an OFF state in which the current is blocked from flowing between the source and the drain thereof. The source electrode of the charge block switch **SW1** is located on the load resistance **RL** side. Therefore, a voltage is applied between the gate and the source of the charge block switch **SW1** by the output from the comparator **IC3** via the level shift functional block **F3.** Owing to this, a gate potential as seen from a source potential of the charge block switch **SW1,** which is different from a source potential of the discharge block switch **SW2,** can be changed with respect to the input of the level shift functional block **F3.** In this manner, the charge operation can be finished when the charge voltage becomes 4.2 V.

According to this embodiment, for example, the discharge end voltage VDc can be set to 3.16 V and the charge end voltage VCc can be set to 4.2 V, and the lithium secondary battery **30** can be charged/discharged between these voltages (operation mode I).

By switching the connection of the switching means **SW10** in a hardware manner or a software manner, the charge/discharge system can be made operable in a mode different from operation mode I (i.e., in operation mode II). In operation mode II, for example, the discharge end voltage VDc can be set to 2.68 V and the charge end voltage VCc can be set to 4.2 V, and the lithium secondary battery **30** can be charged/discharged between these voltages.

The switching of the operation mode, namely, the switching of the connection of the switching means **SW10,** may be performed automatically by a system which uses energy of the battery (charge/discharge system) in a predetermined method. Alternatively, the charge/discharge system may be structured to allow the connection of the switching means **SW10** to be switched by a user setting.

The structure of the charge/discharge system in this embodiment is not limited to the structure shown in FIG. **8** or FIG. **9****.** For example, the discharge control section **35** and the charge control section **34** may be formed of a microcomputer.

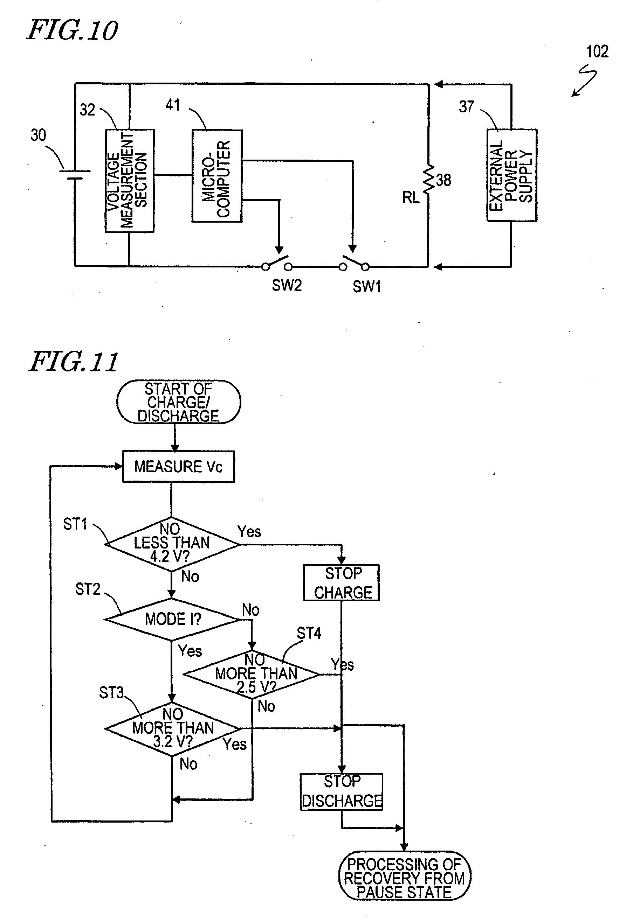

FIG. **10** is a block diagram showing an example of structure of another charge/discharge system **102** capable of realizing charge/discharge control substantially the same as that of the charge/discharge system **100** shown in FIG. **8** and FIG. **9****.**

The charge/discharge system **102** includes a voltage measurement section **32** formed of an A/D converter or the like, a microcomputer **41** for varying the threshold voltage for charge and the threshold voltage for discharge upon receiving a signal from the voltage measurement section **32,** and a charge block switch **SW1** and a discharge block switch **SW2** which can be turned on or off by an output signal from the microcomputer **41.** Although not shown in FIG. **10****,** the charge/discharge system **102** includes a level shift functional block described above with reference to FIG. **9****.**

The microcomputer **41** is programmed to stop the charge when the battery voltage Vc measured by the voltage measurement section **32** becomes equal to or higher than the charge end voltage VCc, and is programmed to stop the discharge when the battery voltage Vc measured by the voltage measurement section **32** becomes equal to or lower than the discharge end voltage VDc. The charge end voltage VCc and the discharge end voltage VDc may be each set in advance or may be each set based on a voltage selected from a plurality of voltages set in advance (base voltages).

An example of flowchart of such a program is shown in FIG. **11****.**

According to the program shown in FIG. **11**, when the charge/discharge of the lithium secondary battery **30** is started, the voltage measurement section **32** starts measuring the battery voltage Vc. In step **ST1,** when the measured value of the battery voltage Vc is equal to or higher than 4.2 V, the charge is stopped. When the measured value of the battery voltage Vc is less than 4.2 V, it is selected whether or not to operate the lithium secondary battery **30** in operation mode I described above in step **ST2.** In the case where the lithium secondary battery **30** is to be operated in operation mode I, when the measured value of the battery voltage Vc is more than 3.2 V in step **ST3,** the program is returned to step **ST1.** When the measured value of the battery voltage Vc is equal to lower than 3.2 V, the discharge is stopped. By contrast, in the case where the lithium secondary battery **30** is selected not to be operated in operation mode I (i.e., in the case where the lithium secondary battery **30** is to be operated in operation mode II), when the measured value of the battery voltage Vc is more than 2.0 V in step **ST4,** the program is returned to step **ST1.** When the measured value of the battery voltage Vc is equal to or lower than 2.0 V, the discharge is stopped.

The charge end voltage VCc and the discharge end voltage VDc may be autonomously selected in consideration of the conditions of use or the like, or may be set to be selectable by the user each time in accordance with the state of use, depending on the program. Although not described in detail here, the voltage measurement and the charge/discharge are optionally resumed (recovery processing) in accordance with the change in the state of the battery after the charge is stopped or the discharge is stopped.

As can be seen, the charge/discharge system 102 shown in FIG. **10** realizes charge/discharge control substantially the same as that of the charge/discharge system **100** shown in FIG. **8** and FIG. **9****,** and provides substantially the same effect.

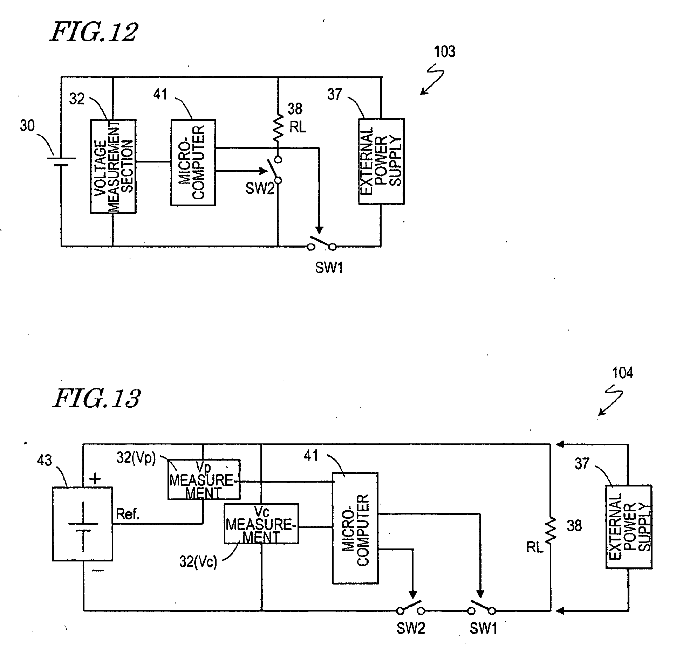

FIG. **12** is a block diagram showing a structure of still another charge/discharge system **103** in this embodiment. The charge/discharge system **103** has substantially the same structure as that of the charge/discharge system **102** shown in FIG. **10** except the location of the charge control switch **SW2.** The charge/discharge system **103** also provides substantially the same effects as those described above.

### (EMBODIMENT 4)

Hereinafter, Embodiment 4 according to the present invention will be described with reference to the drawings.

This embodiment regards a charge/discharge system including a lithium secondary battery having a reference electrode and a control circuit therefor. The lithium secondary battery used in this embodiment may have a structure including the stacked-type or wound-type lithium secondary battery described in Embodiments 1 and 2 (FIG. **4,** FIG. **5**) and a reference electrode. The reference electrode and the reference electrode tab may be located as shown in, for example, FIG. **3****.** In this embodiment, there are no specific limitations as to the form of the lithium secondary battery as long as the lithium secondary battery uses a positive-electrode active material containing a nickel-type lithium-containing complex oxide and is a three-electrode cell including the reference electrode.

The charge/discharge system in this embodiment is widely applicable for mobile compact electronic devices, various electric products including vehicles such as electric automobiles, hybrid cars and the like, and battery packs and battery modules usable for the same.

FIG. **13** is a block diagram showing an example of structure of a charge/discharge system **104** in this embodiment.

The charge/discharge system **104** includes a lithium secondary battery **43** including a reference electrode (**Ref.**), voltage measurement sections **32(Vp)** and **32(Vc),** a microcomputer **41** for controlling charge/discharge upon receiving a voltage measurement signal from each of the voltage measurement sections **32(Vp)** and **32(Vc),** an external power supply **37,** and a load section **38.** The voltage measurement section **32(Vp)** measures the voltage (potential difference) between the positive electrode and the reference electrode of the lithium secondary battery **43,** and senses a positive electrode potential Vp on a lithium metal basis (hereinafter, referred to simply as the "positive electrode potential Vp") based on the measured value. In the case where lithium metal is used for the reference electrode, the voltage between the positive electrode and the reference electrode is the positive electrode Vp. The voltage measurement section **32(Vc)** measures the potential difference between the positive electrode and the negative electrode to sense the battery voltage Vc. The microcomputer **41** has a program for switching the threshold voltage charge/discharge based on the signal from the voltage measurement section **32(Vp)** or **32(Vc)** during the charge/discharge of the lithium secondary battery **43.**

Although not shown here, a positive or negative power supply voltage required for operating each block is supplied when necessary.

In FIG. **13**, one lithium secondary battery **43** is shown, but a plurality of lithium secondary batteries each including the reference electrode may be connected to each other for use.

During the discharge of the lithium secondary battery **43,** the microcomputer **41** receives a measured value of the positive electrode potential Vp and a measured value of the battery voltage Vc from the voltage measurement sections **32(Vp)** and **32(Vc).** When either one of the measured values of Vp and Vc reaches a respective preset voltage, the microcomputer **41** stops the discharge of the lithium secondary battery **43.**

Similarly, during the charge of the lithium secondary battery **43,** the microcomputer **41** receives a measured value of the positive electrode potential Vp and a measured value of the battery voltage Vc from the voltage measurement sections **32(Vp)** and **32(Vc).** When either one of the measured values of Vp and Vc reaches a respective preset voltage, the microcomputer **41** stops the charge of the lithium secondary battery **43.**

In the lithium secondary battery **43** in this embodiment, graphite is used as the negative-electrode active material, and a nickel-type lithium-containing complex oxide is used as the positive-electrode active material. The discharge end voltage VDc between the positive electrode and the negative electrode of the lithium secondary battery **43** is set to the first threshold voltage VDc1, which is of more than 2.0 V and no more than 3.2 V. A discharge end potential VDp is set to the first potential VDp1, which is no less than 2.7 V and no more than 3.4 V. Accordingly, the discharge of the lithium secondary battery **43** is controlled to be stopped when the measured value of the battery voltage Vc reaches the first threshold value VDc1 (Vc ≤ VDc1), or when the measured value of the positive electrode potential Vp reaches the first potential VDp1 (Vp ≤ VDp1).

As each of the voltage measurement sections **32(Vp)** and **32(Vc),** a device which is formed of an A/D converter and is capable of measuring a voltage in the range necessary for detection with a desired resolution is selected.

Here, both of the positive electrode potential Vp and the battery voltage Vc are measured. Alternatively, only the positive electrode potential Vp may be measured so that the charge/discharge of the lithium secondary battery **43** is controlled based on the measured value. Although not shown, in addition to the positive electrode potential Vp, the battery voltage Vc or both of them, a negative electrode potential Vn on a lithium metal basis (hereinafter, referred to simply as the "negative electrode potential Vn") may be measured. The negative electrode potential Vn may be sensed based on a measured value of potential difference between the negative electrode and the reference electrode. The charge/discharge may be controlled based on the measured value of the negative electrode potential Vn in addition to the measured value of the positive electrode potential Vp or the battery voltage Vc. In this case, the discharge may be controlled to be stopped when the measured value of the negative electrode potential Vn reaches a value VDn in the range of, for example, no less than -0.7 V and no more than - 0.1 V (discharge end potential VDn). Herein, each of the potentials is represented as a voltage value with respect to the negative electrode in order to be matched to the circuit diagram. This is why the negative electrode potentials are represented with negative values. These values of negative electrode potentials are positive when being represented with respect to the reference electrode. Both representations mean the same although the signs are opposite.

According to this embodiment, by controlling the charge/discharge of the lithium secondary battery **43** as described above, the charge/discharge cycle characteristics can be improved while the decrease in the capacity of the lithium secondary battery **43** is suppressed in substantially the same manner as that described above.

In the charge/discharge system **104** in this embodiment, the discharge end voltage may be switchable by the program of the microcomputer **41.** For example, the discharge end voltage VDc may be set to be switchable between a voltage VDc1 set to a level in the range of more than 2.0 and no less than 3.2 V (first threshold voltage VDc1), and a voltage VDc2 which is lower than the voltage VDc1 (second threshold voltage VDc2). The positive electrode potential corresponding to the first threshold voltage VDc1 is, for example, no less than 2.7 V and no more than 3.4 V, and the negative electrode potential Vn corresponding to the first threshold voltage VDc1 is, for example, no less than - 0.7 V and no more than -0.1 V. Therefore, at the same time when the discharge end voltage VDc is switched, the discharge end potential VDp may also be switched between the potential VDp1 which is no less than 2.7 V and no more than 3.4 V (first potential VDp1), and the potential VDp2 which is lower than the first potential VDp1 (second potential VDp2). For also measuring the negative electrode potential Vn, at the same time when the discharge end **voltage** VDc is switched, the discharge end potential VDn may be also switched between the potential VDn1 which is no less than -0.7 V and no more than - 0.1 V, and the potential VDn2 which is lower than potential VDn1.

In the case where the discharge end voltage VDc is switchable, the lithium secondary battery **43** can be operated in the state where the discharge end voltage VDc is optionally set to the first threshold voltage VDc1 in accordance with the application, the state of use or the like of the electronic device. Therefore, the charge/discharge cycle characteristics of the lithium secondary battery **43** can be improved more effectively, and the life thereof can be extended. The second threshold voltage VDc2 may be more than 2.5 V or no more than 2.5 V.

As described above, only the positive electrode potential Vp may be measured without measuring the battery voltage Vc. In this case, by switching the discharge end potential VDp between the first potential VDp1 and the second potential VDp2, substantially the same effects as those described above are provided. In this case, the negative electrode potential Vn may be measured so that the discharge end potential VDn of the negative electrode can be switched between the above-described two potentials when the discharge end potential VDp of the positive electrode is switched.

In the charge/discharge system **104** shown in FIG. **13****,** the voltage measurement sections **32(Vp)** and **32(Vc)** and the microcomputer **41** may be provided inside the battery back or the battery module including the lithium secondary battery **43.** Alternatively, a control device including the voltage measurement sections **32(Vp)** and **32(Vc)** and the microcomputer **41** may be provided on the electronic device side or the vehicle side.

In the charge/discharge system **104** also, the microcomputer **41** is programmed to perform desired charge/discharge control.

Now, a flowchart of the program for controlling the charge/discharge of the lithium secondary battery **43** in the charge/discharge system **104** will be described with reference to the drawings.

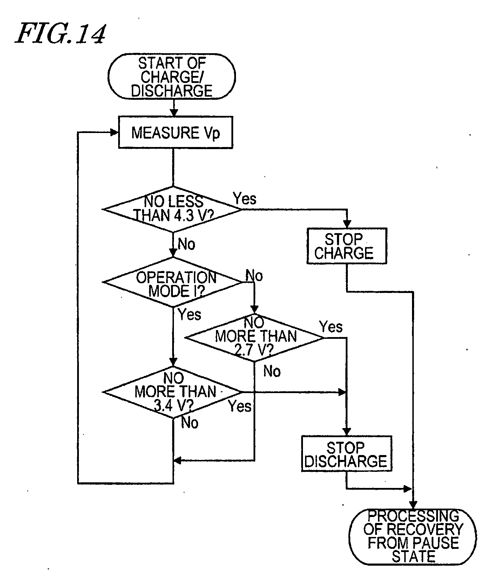

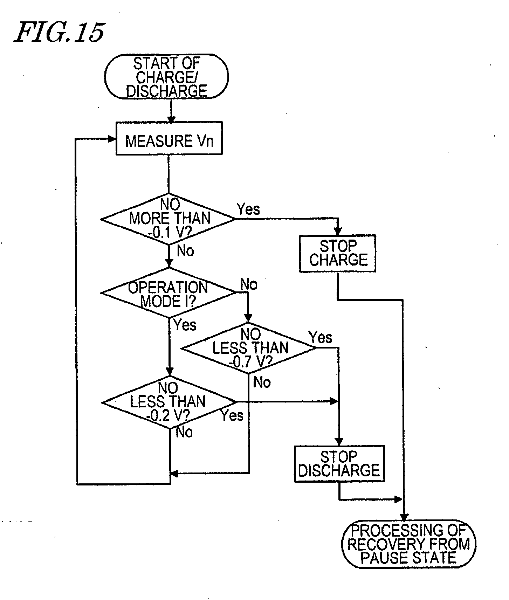

FIG. **14** through FIG. **16** are flowcharts showing examples of charge/discharge control based on the measured values of the positive electrode potential Vp, the negative electrode potential Vn, and the battery voltage Vc, respectively.

According to the flowcharts shown in FIG. **14** through FIG. **16****,** the positive electrode potential Vp can be controlled to be in the range of no less than 3.4 V and less than 4.3 V, the negative electrode potential Vn can be controlled to be in the range of no less than -0.2 V and less than -0.1 V, and the battery voltage Vc can be controlled to be in the range of no less than 3.2 V and less than 4.2 V. Therefore, the lithium secondary battery **43** can be charged/discharged within such voltage ranges (operation mode I).

By mode switching, the charge/discharge system **104** can be made operable in a mode different from operation mode I (i.e., in operation mode II). In operation mode II, for example, the positive electrode potential Vp can be controlled to be in the range of more than 2.7 V and less than 4.3 V, the negative electrode potential Vn can be controlled to be in the range of more than -0.7 V and less than -0.1 V, and the battery voltage Vc can be controlled to be in the range of more than 2.5 V and less than 4.2 V. Therefore, the lithium secondary battery **43** can be charged/discharged within such voltage ranges.

The switching of the operation mode may be performed automatically by a system which uses energy of the lithium secondary battery **43** (charge/discharge system **104)** in a predetermined method. Alternatively, the charge/discharge system **104** may be structured to be switch the operation mode by a user setting.

### (EMBODIMENT 5)

In this embodiment, a charge/discharge method by which the operation mode of the lithium secondary battery can be switched based on the temperature of the lithium secondary battery (hereinafter, referred to as the "battery temperature") will be described.

First, with reference to the drawings, advantages provided by switching the operation mode of the lithium secondary battery based on the battery temperature will be described.

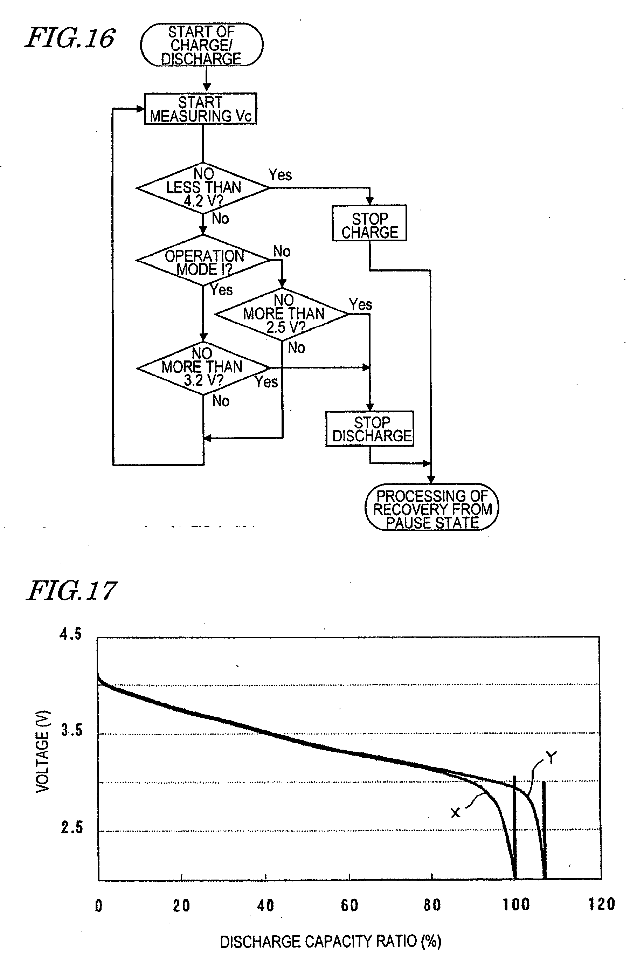

FIG. **17** shows discharge curves of a lithium secondary battery (lithium ion battery) containing a lithium-containing nickel complex oxide as the positive-electrode active material and an oxide of silicon as the negative-electrode active material. In FIG. **17****,** "X" represents a discharge curve when the battery temperature is 25°C, and "Y" represents a discharge curve when the battery temperature is 45°C. During the discharge of the lithium secondary battery, the discharge curves show a conspicuous voltage drop after reaching a prescribed depth of discharge (DOD). In the case of this lithium secondary battery, where the discharge capacity at 25°C at a prescribed discharge rate is 100%, the discharge curve at 45°C shows a conspicuous voltage drop after the discharge capacity ratio exceeds about 105% at the same discharge rate.

As can be seen, the point of DOD at which a voltage drop occurs may significantly vary in accordance with the battery temperature. Therefore, if, when the battery temperature is high, the battery is discharged down to the same discharge end voltage as that when the temperature battery is low, the discharge capacity may become excessively large. In this case, the crystalline structure of the positive electrode may undesirably be deteriorated significantly, which may deteriorate the cycle characteristics.

Hence, in this embodiment, when the battery temperature becomes high, the operation mode is switched to a mode in which the discharge end voltage is high. Owing to this, the DOD of the battery when the discharge is finished does not vary significantly. This can suppress lithium ions from being excessively inserted into the positive electrode when the battery temperature is high. Therefore, the charge/discharge characteristics can be suppressed from being deteriorated due to the change in the battery temperature.

Such a charge/discharge method is widely applicable to lithium secondary batteries, battery packs including lithium secondary batteries, charge/discharge systems, electronic devices, vehicles and the like. Especially when the environment temperature of use of the lithium secondary battery is variously changed, the charge/discharge characteristics of the lithium secondary battery can be effectively improved.

A battery pack to which the charge/discharge method in this embodiment is applicable includes, for example, a lithium secondary battery, a voltage measurement section for detecting the voltage of the lithium secondary battery (battery voltage), a temperature measurement section for detecting the temperature of the lithium secondary battery (temperature sensor), and a discharge control section for controlling the discharge of the lithium secondary battery. A discharge control system to which the charge/discharge method in this embodiment is applicable includes, for example, a lithium secondary battery, a voltage measurement section for detecting the voltage of the lithium secondary battery, a temperature sensor for detecting the temperature of the lithium secondary battery, a discharge control section for controlling discharge of the lithium secondary battery, and a charge control section for controlling charge of the lithium secondary battery. The discharge control section has a function of changing the discharge end voltage in accordance with the battery temperature detected by the temperature sensor.

The above-described charge/discharge system may include a device for consuming the power supplied from the lithium secondary battery (load section). Occasionally, the charge/discharge system includes an external power supply for supplying power to the lithium secondary battery at the time of charge, a switching circuit for changing the charge mode into the discharge mode or vice versa, and the like.

The voltage measurement section has a function of measuring the voltage Vc of the lithium secondary battery included in the battery pack and transmitting the measurement result to an computation section. As the voltage measurement section, any of various types of voltage measurement devices can be used with no specific limitation.

The temperature sensor has a function of detecting the temperature of the lithium secondary battery or the inner temperature of the battery pack. As the temperature sensor, any of various types of temperature sensors can be used with no specific limitation. It is desirable that the temperature sensor is located adjacent to the lithium secondary battery in order to realize accurate temperature measurement.

The discharge and charge control sections are each formed of an IC, a CPU, a microcomputer or the like. The discharge control section has a function of switching the battery voltage VDc which is the reference for stopping the discharge (discharge end voltage VDc) in accordance with the temperature information of the lithium secondary battery detected by the temperature sensor. The charge control section has a function of controlling the charge of the lithium secondary battery.

There are no specific limitations as to the location of the discharge control section. For example, in the case of the battery pack, the discharge control section is accommodated in the battery pack. In the case of the charge/discharge system, the discharge control section may be accommodated in the battery pack or in the load section. There are no specific limitations as to the location of the charge control section.

In this embodiment, the discharge control section includes means for switching the discharge end voltage VDc at which the discharge is finished. When the battery temperature is higher than Tx, the discharge end voltage VDc of the battery is set to the first threshold voltage VDc1; whereas when the battery temperature is equal to or lower than the prescribed temperature (Tx), the discharge end voltage VDc is set to the second threshold voltage VDc2, which is lower than the first threshold voltage VDc1.

The first threshold voltage VDc1 is set in the range of battery temperature corresponding to the discharge potential of the positive-electrode active material on a lithium metal basis, namely, the discharge potential of no less than 2.7 V and no more than 3.4 V. The second threshold voltage VDc2 may be within, or lower than, the above-mentioned range of battery temperature. Owing to this, when the temperature of the battery is high, the discharge can be finished at a higher battery temperature. This can effectively suppress the battery from being put into an excessively discharged state. The switching of the discharge end voltage VDc is performed by, for example, a program included in the discharge control section.

Preferably, the prescribed temperature Tx, which is the border at which the discharge end voltage VDc is switched, is set to be in the range of -10 to 60°C. Reasons for this are that the battery pack is usually used in the range of -10 to 60°C; and that in a lithium secondary battery using a nickel-type lithium-containing complex oxide as the positive-electrode active material, the discharge capacity tends to be significantly changed in the range of -10 to 60°C in accordance with the temperature. Especially at a temperature of 25°C or higher, when the discharge capacity is increased, lithium ions are excessively supplied to the positive-electrode active material. For these reasons, it is more preferable that the prescribed temperature Tx is set to be in the range of 25 to 60°C.

The first and second threshold voltages VDc1 and VDc2 are each set to be preferably in the range of no less than 1.5 V and no more than 3.5 V, and more preferably, in the range of 2.0 to 3.5 V. When the second threshold voltage VDc2 is lower than 1.5 V, even if the battery temperature is low, the positive electrode may be put into an excessively discharged state. By contrast, when the first threshold voltage VDc1 is higher than 3.5 V, even if the battery temperature is high, the battery capacity may be insufficient.

A difference between the first threshold voltage VDc1 and the second threshold voltage VDc2, namely, ΔV (=VDc1 - VDc2) is preferably no less than 0.005 V and no more than 1.5 V, and more preferably no less than 0.1 V and no less than 1.0 V. When the threshold voltage difference ΔV is too small, the effect of suppressing the deterioration of the positive electrode is reduced. When the difference ΔV is too large, the usable battery capacity may vary excessively in accordance with the temperature.

This embodiment is especially useful when the irreversible capacity of the positive electrode is larger than the irreversible capacity of the negative electrode at a prescribed temperature of the lithium secondary battery. In a structure in which the irreversible capacity of the positive electrode is larger than the irreversible capacity of the negative electrode, as the discharge proceeds, the lithium secondary battery is put into a state where the lithium ions cannot be occluded by the positive electrode although the lithium ions can still be released by the negative electrode. When the lithium secondary battery is put into such a state, the discharge is finished. However, when the battery temperature rises, the number of lithium ions which can be occluded by the positive electrode increases. Therefore, the positive electrode is forced to occlude the lithium ions released by the negative electrode, and as a result, the deterioration of the positive electrode is promoted. Hence, when the irreversible capacity of the positive electrode is larger than the irreversible capacity of the negative electrode at a prescribed temperature, it is important to suppress the deterioration of the positive electrode.

In this embodiment, the positive electrode contains a lithium-containing complex oxide as the positive-electrode active material. Preferably, the lithium-containing complex oxide has a hexagonal layer structure or a spinel crystalline structure. Such a lithium-containing complex oxide has a large capacity and has a high potential with respect to metallic lithium, and therefore can realize a high-output lithium secondary battery. Among lithium-containing complex oxides, a lithium-containing nickel complex oxide is preferable as the positive-electrode active material because a positive-electrode active material containing nickel as a main component has an especially high capacity.

In the lithium-containing nickel complex oxide, the molar ratio of Ni with respect to Li is preferably equal to or higher than 10%, and more preferably 50 to 100 mol%. In addition, it is preferable that the lithium-containing nickel complex oxide contains at least one selected from the group consisting of manganese, cobalt and aluminum. When the lithium-containing nickel complex oxide contains manganese, the molar ratio of Mn with respect to Li is preferably 10 to 40 mol%. When these lithium-containing nickel complex oxide contains cobalt, the molar ratio of Co with respect to Li is preferably 5 to 40 mol%. When the lithium-containing nickel complex oxide contains aluminum, the molar ratio of Al with respect to Li is preferably 0.5 to 10 mol%. Among these lithium-containing nickel complex oxides, a lithium-containing nickel complex oxide containing cobalt and aluminum tends to have the crystalline structure thereof deteriorated when the discharge capacity is changed by the temperature to cause an excessively discharged state. Therefore, the charge/discharge method in this embodiment provides an especially large effect.

In a preferred embodiment according to the present invention, the negative electrode contains a carbon material or an alloy-type active material. It is preferable that the negative electrode has lithium in an amount corresponding to the irreversible capacity thereof occluded thereto before the battery is assembled. In this case, the irreversible capacity of the positive electrode can be made larger than the irreversible capacity of the negative electrode, and therefore, the effect of suppressing the deterioration of the positive electrode is increased as described above.

As the carbon material, any of graphite, easily graphitizable carbon materials and the like is usable.

The alloy-type active material is a substance which, when being alloyed with lithium, occludes lithium ions, and reversibly occludes and releases lithium ions under the negative electrode potential. As the alloy-type active material, any of silicon-based active materials, tin-based active materials and the like is preferably usable. The silicon-based active materials include silicon, silicon compounds, substituents thereof, solid solutions thereof and the like. The silicon compounds include oxides of silicon represented by chemical formula SiOa (0.005 < a < 1.95), carbides of silicon represented by chemical formula SiCb (0 < b < 1), nitrides of silicon represented by chemical formula SiNc (0 < c < 4/3), silicon alloys and the like. A silicon alloy is an alloy of silicon and a different element A. The different element A may be Fe, Co, Sb, Bi, Pb, Ni, Cu, Zn, Ge, In, Sn, Ti or the like.

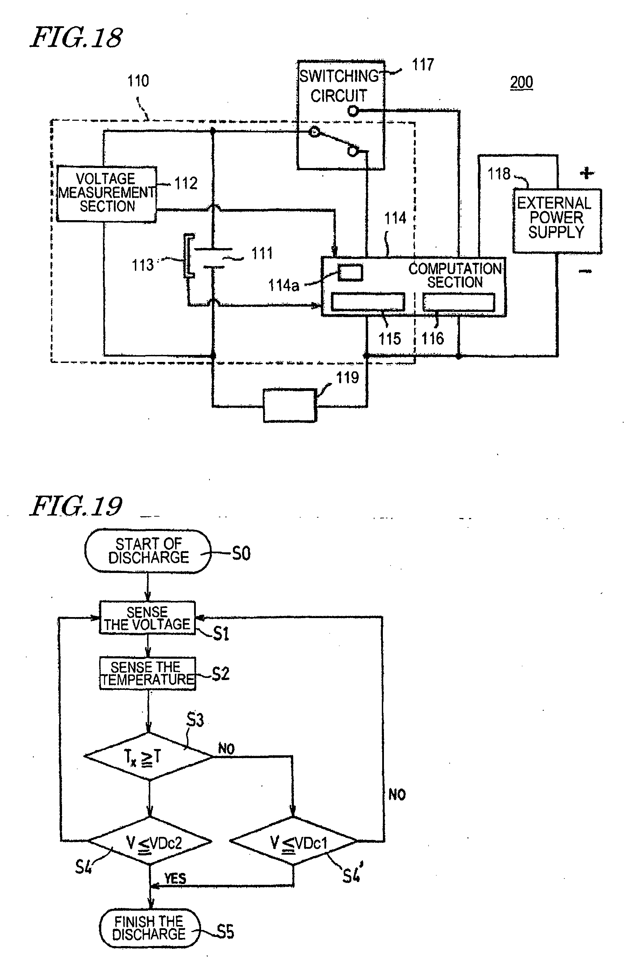

Now, a structure of a battery pack according to the present invention and a method for discharging the same will be described more specifically with reference to FIG. **18** and FIG. **19****.**

FIG. **18** is a circuit diagram showing an example of structure of a charge/discharge system including a battery pack **110** according to the present invention. FIG. **19** is a flowchart showing an example of method for discharging the battery pack **110.**

The battery back **110** includes a lithium secondary battery **111,** a voltage measurement section **112** for detecting the voltage of the lithium secondary battery **111,** a temperature sensor **113** for detecting the temperature of the lithium secondary battery **111,** and a computation section **114** for managing charge/discharge of the lithium secondary battery **111.** The computation section **114** has a storage section **114a**, a discharge control section **115,** and a charge control section **116** built therein. The battery pack **110** forms a charge/discharge system **200** together with the charge control section **116** for controlling charge of the lithium secondary battery **111,** a switching circuit **117** and an external power supply **118.**

The computation section **114** is formed of an IC, a CPU, a microcomputer or the like, and a part of the computation section **114** forms the discharge control section **115** and the charge control section **116.** The computation section **114** is connected with the voltage measurement section **112** and the temperature sensor **113.**

The computation section **114** includes the storage section **114a.** The storage section **114a** is formed of any of various types of information storage mediums such as a ROM, a RAM, a CD, a DVD and the like. The storage section **114a** stores a preset relationship between the battery temperature and the discharge end voltage. Specifically, the storage section **114a** stores a plurality of preset voltages (hereinafter, referred to as the "base voltages"). Each of the base voltages is set to be in a predetermined battery temperature range.

When the temperature sensor **113** detects the temperature of the battery **111,** information on the detected temperature is transmitted to the computation section **114.** The computation section **114** compares the received temperature information against the relationship between the battery temperature and the discharge end voltage stored in the storage section **114a,** and selects a base voltage in accordance with the temperature information. Based on the selected base voltage, the discharge control section **115** switches the voltage VDc at which the discharge is finished (discharge end voltage).

The switching circuit **117** includes a discharge switch for controlling the connection between the positive electrode of the battery **111** and a positive electrode-side terminal of the discharge control section **115**, and a charge switch for controlling the connection between the positive electrode of the battery **111** and a positive electrode-side terminal of the charge control section **116.** When the discharge switch is turned ON, the positive electrode of the battery **111** and the positive electrode-side terminal of the discharge control section **115** are connected to each other. When the discharge switch is turned OFF, the positive electrode of the battery **111** and the positive electrode-side terminal of the discharge control section **115** are disconnected from each other. When the charge switch is turned ON, the positive electrode of the battery **111** and the positive electrode-side terminal of the charge control section **116** are connected to each other. When the charge switch is turned OFF, the positive electrode of the battery **111** and the positive electrode-side terminal of the charge control section **116** are disconnected from each other. When the voltage of the battery **111** reaches a predetermined discharge end voltage VDc, the discharge switch is turned OFF.

Now, the operation from when the battery pack **110** starts to be discharged until the discharge is finished will be described in detail with reference to the flowchart in FIG. **19****.**

At the start of the discharge (**S0**), the power starts to be supplied to a device **119.** The voltage Vc of the battery **111** is gradually lowered from the start of the discharge.

When a prescribed time period passes after the start of the discharge, the voltage measurement section **112** detects the voltage Vc of the battery **111** (**S1**). Information on the detected voltage Vc is transmitted to the computation section **114.**

Next, the discharge control section **115** of the computation section **114** detects the temperature T of the battery **111** by means of the temperature sensor **113** (**S2**). The discharge control section **115** selects one of the plurality of preset base voltages based on the temperature information transmitted from the temperature sensor **113**, and sets the discharge end voltage VDc based on the selected base voltage (**S3**). In this example, the voltage VDc1 and the voltage VDc2 are preset as the base voltages. When the battery temperature T is equal to or lower than the prescribed temperature Tx, the discharge end voltage VDc is set to the voltage VDc2. When the battery temperature T is higher than Tx, the discharge end voltage VDc is set to the voltage VDc1, which is higher than the voltage VDc2.

Next, the battery voltage Vc detected by the voltage measurement section **112** is compared against the selected discharge end voltage (here, the first or second threshold voltage) VDc (**S4**, **S4'**). When (a) the battery voltage Vc is equal to or lower than the selected discharge end voltage VDc, the discharge is finished (**S5**). When (b) the battery voltage V**c** is higher than the selected discharge end voltage VDc, the discharge is continued. When the discharge is to be continued, a prescribed time period later, the voltage measurement section **112** detects the battery voltage Vc (**S1**) and the temperature sensor **113** detects the battery temperature T (**S2**). After this, substantially the same operation is repeated.

The detection of the battery voltage Vc by the voltage measurement section **112** (**S1**) and the detection of the battery temperature T by the temperature sensor **113** (**S2**) may be performed sequentially with either one of them being performed first, or may be performed at the same time.

According to the flowchart in FIG. **19****,** the reference temperature at which the discharge end voltage is switched is the temperature Tx. Alternatively, a plurality of reference temperatures may be set, for example, as follows.
(1) When the battery temperature T is equal to or lower than T1, the discharge end voltage VDc is V1;
(2) When the battery temperature T is higher than T1 and no more than T2, the discharge end voltage VDc is V2 (V1 < V2); and
(3) When the battery temperature T is equal to or higher than T2, the discharge end voltage VDc is V3 (V2 < V3).
In the charge/discharge control described in (1) through (3) above, two reference temperatures (T1 and T2) are set. Alternatively, three or more reference temperatures may be set.

The detection of the battery temperature T by the temperature sensor **113** (**S2**) may be performed each time the detection of the battery voltage Vc by the voltage measurement section **112** is performed, but may be performed less frequently. For example, when the battery voltage Vc is higher than the prescribed voltage, the detection of the battery temperature T does not need to be performed. It is sufficient that the battery temperature T is detected (**S2**) after the battery voltage Vc becomes close to the highest base voltage among the present base voltages. Specifically, it is efficient to detect the battery temperature T by the temperature sensor **113** when the battery voltage Vc is equal to or lower than 3.5 V. A reason for this is that a conspicuous voltage drop during the discharge usually occurs when the battery voltage Vc is equal to or lower than 3.5 V.

The discharge curve of the lithium secondary battery is changed also in accordance with the discharge rate (discharge current value). Hence, it is preferable to adjust the discharge end voltage VDc in accordance with the discharge rate. Specifically, it is desirable that as the discharge current value is lower (as the rate of lower), the discharge end voltage VDc is higher. For example, the discharge end voltage VDc may be obtained by selecting one base voltage among the plurality of preset base voltages based on the battery temperature T and then correcting the selected base voltage in accordance with the discharge rate. Alternatively, after the correction amount is determined based on the discharge current value at the start of the discharge, the base voltage is selected based on the battery temperature T and the correction is performed with the determined correction amount.

When the correction is to be performed, a plurality of base voltages corresponding to a prescribed battery temperature range may be set in correspondence with discharge rates. For example, when the battery temperature T is equal to or lower than Tx, the discharge end voltage VDc may be set to "base voltage V₁ + dV", and dV may be changed in accordance with the discharge rate. When the battery temperature T is higher than Tx, the discharge end voltage VDc may be set to "base voltage V₂ + dV" (V₂ > V₁), and dV may be again changed in accordance with the discharge rate.

In this embodiment, the discharge is finished when the battery voltage Vc during the discharge of the lithium secondary battery reaches a prescribed discharge end voltage VDc. Alternatively, the discharge may be finished when the positive electrode potential Vp during the discharge reaches a prescribed discharge end voltage VDp. In this case, for example, a reference electrode may be provided in the lithium secondary battery, so that the positive electrode potential Vp during the discharge is measured by measuring the potential difference between the reference electrode and the positive electrode. Alternatively, the discharge end potential VDp may be set to a potential selected in accordance with the battery temperature T from a plurality of preset base potentials. Owing to this, substantially the same effect as that of this embodiment is provided. When necessary, the base potential selected in accordance with the battery temperature T may be corrected based on the discharge rate.

### (EXAMPLE 3)

Now, this embodiment will be described more specifically by way of examples.

### <Production of an evaluation cell>

### (3-1) Production of a positive electrode

As the positive-electrode active material, LiNi_{0.85}Co_{0.15}Al_{0.05}O₂, which is a nickel-type lithium-containing complex oxide containing cobalt and aluminum, was used.

85 parts by weight of the positive-electrode active material, 10 parts by weight of carbon powder as a conductive agent, and an N-methyl-2-pyrrolidone solution of polyvinylidene fluoride (PVDF) as a binder were mixed together to obtain a positive-electrode mixture paste. PDVF was contained in a content of 5 parts by weight. The obtained positive-electrode mixture paste was applied onto one surface of an aluminum foil having a thickness of 15 µm (positive-electrode current collector) **11a,** dried and rolled. Thus, a positive electrode having a thickness of 70 µm was produced.

The obtained positive electrode was cut into a shape having a 20 mm-cube active material part and a 5 mm-cube lead-attaching part at an end of the active material part.

### (3-2) Production of a negative electrode

A copper alloy foil having a plurality of convexed portions having a maximum height Rz of about 8 µm formed on both surfaces thereof was used as a negative-electrode current collector **22.** On one surface of the negative-electrode current collector, an oxide of silicon, i.e., SiO_{0.2}, was vapor-deposited to form a negative-electrode active material layer. As a device for vapor deposition, a vapor deposition device **30** having a structure shown in FIG. **20** (produced by ULVAC, Inc.) was used. A fixing table **133 having** the negative-electrode current collector **122** fixed thereon in a chamber **131** was set to rotate between a position at which angle α = 60° (represented with solid line in FIG. **20**) and a position at which angle (180 - α) = 120° (represented with one-dot chained line in FIG. **20**)**.** In this manner, an active material layer including a plurality of column-like bodies having 50 grain layers was formed.

The vapor deposition conditions are as follows.

Source material of the negative-electrode active material (vapor deposition source **35**): silicon; purity: 99.9999%; produced by Kojundo Chemical Lab. Co., Ltd.
Oxygen released from nozzle **134:** purity: 99.7%; produced by Nippon Sanso Kabushiki Kaisha
Flow rate of oxygen released from nozzle **134:** 80 sccm
Angle α: 60°
Acceleration voltage for electron beams: -8 kV
Emission: 500 mA
Vapor deposition time: 3 minutes

A cross-section of the negative electrode in the thickness direction was observed by a scanning electron microscope. Regarding each of ten column-like bodies formed on the surface provided with convexed portions, the length from the apex of the convexed portion to the apex of the column-like body was found. An average value of the obtained ten measured values, i.e., 16 µm, was determined as the thickness of the negative-electrode active material layer. The amount of oxygen contained in the column-like bodies was quantified by a baking method to find that the composition of the compound forming the column-like bodies was SiO_{0.2}.

Next, lithium metal was vapor-deposited on a surface of the negative-electrode active material layer. By vapor-depositing lithium metal, lithium in an amount corresponding to the irreversible capacity which is accumulated in the negative-electrode active material during the initial charge/discharge was provided as supplement. The vapor deposition of lithium metal was performed in an argon atmosphere by use of a resistive heating vapor deposition device (produced by ULVAC, Inc.) Lithium metal was put into a boat of tantalum in the resistive heating vapor deposition device. The negative electrode was fixed such that the negative-electrode active material layer would face the boat of tantalum. In an argon atmosphere, a 50 A current was caused to flow through the boat of tantalum to perform vapor deposition for 10 minutes.

The obtained negative electrode was cut into a shape having a 21 mm-cube active material part and a 5 mm-cube lead-attaching part. Thus, the negative electrode was produced.

### (3-3) Preparation of a nonaqueous electrolyte solution

LiPF₆ was dissolved to a concentration of 1.2 mol/L in a mixed solvent containing ethylene carbonate, ethyl methyl carbonate and diethyl carbonate at a volume ratio of 2:3:5 to obtain a nonaqueous electrolyte solution. To 100 parts by weight of the nonaqueous electrolyte solution, 5 parts by weight of vinylene carbonate was added.

### (3-4) Assembly of an evaluation cell

In this example, a lithium secondary battery described above with reference to FIG. **4** was produced as an evaluation cell.

First, the separator **13** and a polyethylene porous film (thickness: 20 µm; produced by Asahi Kasei Corporation) were provided between the positive-electrode active material layer **11b** of the positive electrode **11** and the negative-electrode active material layer **12b** of the negative electrode **12** to produce a stacked-type electrode group. Next, one end of the positive electrode lead **14** formed of aluminum was welded to the positive-electrode current collector **11a,** and one end of the negative electrode lead **15** formed of nickel was welded to the negative-electrode current collector **12a.** The electrode group was inserted into the outer case 17 formed of an aluminum laminated sheet together with the nonaqueous electrolyte solution. Next, the positive electrode lead **14** and the negative electrode lead **15** were extended outside the outer case **17** through openings of the outer case **17.** The openings of the outer case **17** were welded by a gasket (resin) **16** while vacuuming the interior of the outer case **17.** In this manner, an evaluation cell for a lithium secondary battery (design capacity: 15 mAh) was obtained.

### (3-5) Evaluation of the charge/discharge cycle characteristics of the evaluation cell

Charge/discharge tests were conducted under the following conditions using the evaluation cell produced above. 1C = 15 mA.

### <Test 15>

### Test temperature: 25°C

Charge conditions: constant-current, constant-voltage charge; charged at 0.3 C; charge end voltage: 4.2 V; cut-off at 0.05 C

Discharge conditions: constant-current discharge; discharged at 1 C; discharge end voltage: 2.0 V

### <Test 16>

A charge/discharge test was conducted in substantially the same manner as in Test 15 except that the test temperature was 45°C and that the discharge end voltage was set to such a value that the discharge capacity would be equal to that in Test 15. The discharge end voltage was 2.75 V. This discharge end voltage was calculated based on the discharge curves of the evaluation cell measured at 25°C and 45°C measured in advance.

### <Test 17>

For comparison, a charge/discharge test was conducted in substantially the same manner as that in Test 15 except that the test temperature was 45°C.

The charge/discharge was repeated under the conditions of each test, and the discharge capacity at the 100^{th} cycle was measured. The measurement result was compared against the results in Test 15, with the discharge capacity in Test 15 being set to 100. The capacity after the 100^{th} cycle was compared against the capacity after the first cycle to obtain the capacity retention rate (%). These results are shown in Table 3. Table 3 also shows the discharge end potential of the positive electrode corresponding to the discharge end voltage.

**[Table 3]**

| Test No. | Test temperature | Discharge end voltage [V] | Discharge end potential of positive electrode [V] | Discharge capacity at 100^{th} cycle | Capacity retention ratio |
|---|---|---|---|---|---|
| 15 | 25°C | 2.0 | 2.5 | 100 | 96% |
| 16 | 45°C | 2.75 | 3.25 | 100 | 95% |
| 17 | 45°C | 2.0 | 2.5 | 104 | 88% |

As a result of comparing Test 15 and Test 17, it was found that under the condition of the discharge end voltage of 2.0 V, the charge/discharge cycle characteristics at 45°C (Test 17) are lowered than the charge/discharge cycle characteristics at 25°C (Test 15). Specifically, in Test 17, as compared with Test 15, the discharge capacity at 1 C is increased by 4% but the capacity retention ratio is decreased by 8%.

By contrast, in Test 16 in which the discharge end voltage was set to be higher than that in Test 15, i.e., to 2.75 V, even the charge/discharge cycle characteristics at 45°C were approximately as high as those in Test 15.

### <Tests 18 to 22>

Furthermore, the discharge capacity at the first cycle and the capacity retention ratio at the 200^{th} cycle were evaluated using the evaluation cell.

Test temperature: shown in the table

Charge conditions: constant-current, constant-voltage charge; charged at 0.3 C; charge end voltage: 4.2 V; cut-off at 0.05 C

Discharge conditions: constant-current discharge; discharged at 0.2 C; discharge end voltage: shown in the table

The results are shown in Table 4. In Table 4, the discharge capacity in Table 18 is set to 100, and the discharge capacities in the other tests are each shown as a ratio with respect to the discharge capacity in Table 18.

The charge/discharge cycle tests were conducted under the following conditions to evaluate the charge/discharge cycle characteristics.

Test temperature: shown in the table

Charge conditions: constant-current, constant-voltage charge; charged at 0.3 C; charge end voltage: 4.2 V; cut-off at 0.05 C

Discharge conditions: constant-current discharge; discharged at 1 C; discharge end voltage: shown in the table

In Tests 18 to 22, the charge/discharge was repeated 200 times. The 1 C capacity after the 200^{th} cycle was compared against the 1 C capacity at the first cycle to find the capacity retention ratio (%). These results are shown in Table 4. Table 4 also shows the discharge end potential of the positive electrode corresponding to the discharge end voltage.

**[Table 4]**

| Test No. | Test temperature | Discharge end voltage [V] | Discharge end potential of positive electrode [V] | Discharge capacity at 1^{st} cycle | Capacity retention ratio after 200^{th} cycle |
|---|---|---|---|---|---|
| 18 | 25°C | 2.0 | 2.5 | 100 | 89% |
| 19 | 45°C | 2.9 | 3.4 | 101 | 89% |
| 20 | 45°C | 2.75 | 3.25 | 104 | 88% |
| 21 | 45°C | 2.5 | 3.0 | 105 | 87% |
| 22 | 45°C | 2.0 | 2.5 | 106 | 75% |

As a result of comparing Test 18 and Test 22, it was found that under the condition of the discharge end voltage of 2.0 V, the charge/discharge cycle characteristics at 45°C (Test 22) are lowered than the charge/discharge cycle characteristics at 25°C (Test 18). Specifically, in Test 22, as compared with Test 18, the discharge capacity at 0.2 C is increased by 6% but the capacity retention ratio after the 200^{th} cycle is decreased by 14%.

By contrast, in Test 19 in which the discharge end voltage was set to be higher than that in Test 18, i.e., to 2.9 V, even the charge/discharge cycle characteristics at 45°C were approximately as high as those in Test 18. In Tests 20 and 21 also, the capacity retention ratio was higher than that in Test 18.

From the above, it was made clear that by controlling the discharge end voltage in accordance with the battery temperature, the discharge capacity can be suppressed from being increased, and as a result, the deterioration of the charge/discharge cycle characteristics caused by the battery temperature is suppressed.

### INDUSTRIAL APPLICABILITY

The present invention is broadly applicable to a variety of devices in which a lithium secondary battery is used. In particular, applications to power supplies of electronic devices for mobile use, e.g., personal computers, mobile phones, mobile devices, personal digital assistants (PDAs), portable game devices, camcorders and the like will be useful. The present invention is also applicable to secondary batteries which assist electric motors in hybrid electric vehicles, fuel cell vehicles, and the like; power supplies for driving power tools, vacuum cleaners, robots, and the like; motive power sources of Plug-in HEVs (Hybrid Electric Vehicles); and so on.

### REFERENCE SIGNS LIST

- **1**: Battery case
- **2**: Sealing plate
- **3**: Insulation packing
- **4**: Electrode group
- **5**: Positive electrode
- **5a**: Positive electrode lead
- **6**: Negative electrode
- **6a**: Negative electrode lead
- **7**: Separator
- **8**: Insulation ring
- **11**: Positive electrode
- **11a**: Positive-electrode current collector
- **11b**: Positive-electrode active material
- **12**: Negative electrode
- **12a**: Negative-electrode current collector
- **12b**: Negative-electrode active material
- **13**: Separator
- **14**: Positive electrode lead
- **15**: Negative electrode lead
- **16**: Gasket
- **17**: Outer case
- **30, 43**: Lithium secondary battery
- **31**: Reference voltage generation section
- **32**: Voltage measurement section
- **32A**: Discharge voltage measurement section
- **32B**: Charge voltage measurement section
- **34**: Charge control section
- **34a**: Threshold voltage switching section
- **35**: Discharge control section
- **35a**: Threshold voltage switching section
- **37**: External power supply
- **38**: Load section
- **41**: Microcomputer
- **100, 200**: Charge/discharge system
- **110**: Battery pack
- **111**: Lithium secondary battery
- **112**: Voltage measurement section
- **113**: Temperature sensor
- **114**: Computation section
- **114a**: Storage section
- **115**: Discharge control section
- **116**: Charge control section
- **117**: Switching circuit
- **118**: External power supply
- **119**: Device
- **130**: Vapor deposition device
- **131**: Chamber
- **133**: Fixing table
- **134**: Nozzle
- **135**: Vapor deposition source

## Claims

1. A charge/discharge method for a positive-electrode active material in a lithium secondary battery (30, 43, 111), wherein:
the lithium secondary battery includes a positive electrode (5, 11) containing the positive-electrode active material capable of occluding and releasing lithium ions, a negative electrode (6, 12) containing a negative-electrode active material capable of occluding and releasing lithium ions, a separator (7, 13) located between the positive electrode (5, 11) and the negative electrode (6, 12), an electrolyte having a lithium ion conductivity, and a reference electrode (96); and
the positive-electrode active material contains a nickel-type lithium-containing complex oxide;
the negative-electrode active material contains a silicon-based active material;
the charge/discharge method comprising performing first charge/discharge of discharging the positive electrode (5, 11), which has been charged, until a positive electrode potential Vp on a lithium metal basis which is found based on a potential difference between the reference electrode (96) and the positive electrode (5,11) becomes a first potential VDp1 which is no less than 2.7 V and no more than 3.4 V, and then finishing the discharge,
**characterized in that**
a capacity of the negative-electrode active material is larger than a capacity of the positive-electrode active material.

2. The charge/discharge method for a positive-electrode active material of claim 1, wherein the first charge/discharge, and second charge/discharge of discharging the positive electrode, which has been charged, until the positive electrode potential Vp on a lithium metal basis becomes a second potential VDp2 which is lower than the first potential VDp1 and then finishing the discharge, are performed in a switchable manner.

3. The charge/discharge method for a positive-electrode active material of claim 2, wherein a battery temperature T of the lithium secondary battery is detected during the discharge, and the first charge/discharge and the second charge/discharge are switched in accordance with the detected battery temperature T.

4. The charge/discharge method for a positive-electrode active material of claim 3, wherein when the detected battery temperature T is higher than a prescribed temperature Tx, the first charge/discharge is performed; whereas when the detected battery temperature T is equal to or lower than the prescribed temperature Tx, the second charge/discharge is performed.

5. A charge/discharge method for a positive-electrode active material in a lithium secondary battery (30, 43, 111), wherein:
the lithium secondary battery includes a positive electrode (5, 11) containing the positive-electrode active material capable of occluding and releasing lithium ions, a negative electrode (6, 12) containing a negative-electrode active material capable of occluding and releasing lithium ions, a separator (7, 13) located between the positive electrode (5, 11) and the negative electrode (6, 12), an electrolyte having a lithium ion conductivity, and a reference electrode (96); and
the positive-electrode active material contains a nickel-type lithium-containing complex oxide;
the negative-electrode active material contains a silicon-based active material;
the charge/discharge method comprising performing first charge/discharge of discharging the positive electrode (5, 11), which has been charged, until a positive electrode potential Vp on a lithium metal basis which is found based on a potential difference between the reference electrode (96) and the positive electrode (5,11) becomes a first potential VDp1 which is no less than 2.7 V and no more than 3.4 V, and then finishing the discharge,
**characterized in that**
an irreversible capacity of the positive-electrode active material is larger than an irreversible capacity of the negative-electrode active material,
the first charge/discharge, and a second charge/discharge of discharging the positive electrode, which has been charged, until the positive electrode potential Vp on a lithium metal basis becomes a second potential VDp2 which is lower than the first potential VDp1 and then finishing the discharge, are performed in a switchable manner,
a battery temperature T of the lithium secondary battery is detected during the discharge, and the first charge/discharge and the second charge/discharge are switched in accordance with the detected battery temperature T, and
when the detected battery temperature T is higher than a prescribed temperature Tx, the first charge/discharge is performed; whereas when the detected battery temperature T is equal to or lower than the prescribed temperature Tx, the second charge/discharge is performed.

6. The charge/discharge method for a positive-electrode active material of claim 4 or 5, wherein the prescribed temperature T is set to be no less than -10°C and no more than 60°C.

7. The charge/discharge method for a positive-electrode active material of any one of claims 3 through 6, wherein only when the lithium secondary battery has a battery voltage equal to or lower than 3.5 V during the discharge, the battery temperature T is detected.

8. The charge/discharge method for a positive-electrode active material of any one of claims 1 through 7, wherein the nickel-type lithium-containing complex oxide has a composition represented by LiₐNi_{1(b+c)}Co_{b}M_{c}O₂ (1.0 ≤ a ≤ 1.05, 0.1 ≤ b ≤ 0.35, 0.005 ≤ c ≤ 0.30, and M is at least one selected from Al, Sr and Ca).

9. A charge/discharge system for a lithium secondary battery (30, 43, 111), comprising:
the lithium secondary battery (30, 43, 111) including a positive electrode (5, 11) containing a positive-electrode active material capable of occluding and releasing lithium ions, a negative electrode (6, 12) containing a negative-electrode active material capable of occluding and releasing lithium ions, a separator (7, 13) located between the positive electrode (5, 11) and the negative electrode (6, 12), an electrolyte having a lithium ion conductivity, and a reference electrode (96);
a charge control section (34, 116) for controlling charge of the lithium secondary battery (30, 43, 111);
a discharge control section (35, 115) for controlling discharge of the lithium secondary battery (30, 43, 111); and
a voltage measurement section (32, 112); wherein:
the positive-electrode active material contains a nickel-type lithium-containing complex oxide;
the negative-electrode active material contains a silicon-based active material;
the voltage measurement section (32, 112) is adapted to measure a potential difference between the reference electrode (96) and the positive electrode (5,11) during the discharge of the lithium secondary battery (30, 43, 111), and finds a positive electrode potential Vp on a lithium metal basis based on the measured potential difference;
the discharge control section (35, 115) is adapted to perform control such that when it is sensed that the positive electrode potential Vp found by the voltage measurement section (32, 111) has reached a predetermined discharge end potential, supply of power from the lithium secondary battery (30, 43, 111) to a load is stopped, thereby finishing the discharge; and
the discharge end potential is set to a first potential VDp1 which is no less than 2.7 V and no more than 3.4 V,
**characterized in that**
a capacity of the negative-electrode active material is larger than a capacity of the positive-electrode active material.

10. The charge/discharge system of claim 8, further comprising discharge end potential switching means for switching the discharge end potential,
wherein the discharge end potential switching means is capable of switching the discharge end potential between the first potential VDp1 and a second potential VDp2 which is lower than the first potential VDp1.

11. The charge/discharge system of claim 9, wherein:
the lithium secondary battery further includes a temperature measurement section for measuring a battery temperature T during the discharge; and
the discharge end potential switching means switches the discharge end potential in accordance with the battery temperature T measured by the temperature measurement section.

12. The charge/discharge system of claim 10, wherein when the detected battery temperature T is higher than a prescribed temperature Tx, the discharge end potential is set to the first potential VDp1; whereas when the detected battery temperature T is equal to or lower than the prescribed temperature Tx, the discharge end potential is set to the second potential VDp2.

13. A charge/discharge system for a lithium secondary battery (30, 43, 111), comprising:
the lithium secondary battery (30, 43, 111) including a positive electrode (5, 11) containing a positive-electrode active material capable of occluding and releasing lithium ions, a negative electrode (6, 12) containing a negative-electrode active material capable of occluding and releasing lithium ions, a separator (7, 13) located between the positive electrode (5, 11) and the negative electrode (6, 12), an electrolyte having a lithium ion conductivity, and a reference electrode (96);
a charge control section (34, 116) for controlling charge of the lithium secondary battery (30, 43, 111);
a discharge control section (35, 115) for controlling discharge of the lithium secondary battery (30, 43, 111); and
a voltage measurement section (32, 112); wherein:
the positive-electrode active material contains a nickel-type lithium-containing complex oxide;
the negative-electrode active material contains a silicon-based active material;
the voltage measurement section (32, 112) is adapted to measure a potential difference between the reference electrode (96) and the positive electrode (5,11) during the discharge of the lithium secondary battery (30, 43, 111), and finds a positive electrode potential Vp on a lithium metal basis based on the measured potential difference;
the discharge control section (35, 115) is adapted to perform control such that when it is sensed that the positive electrode potential Vp found by the voltage measurement section (32, 111) has reached a predetermined discharge end potential, supply of power from the lithium secondary battery (30, 43, 111) to a load is stopped, thereby finishing the discharge; and
the discharge end potential is set to a first potential VDp1 which is no less than 2.7 V and no more than 3.4 V,
**characterized in that**
an irreversible capacity of the positive-electrode active material is larger than an irreversible capacity of the negative-electrode active materials,
the charge/discharge system further comprises discharge end potential switching means for switching the discharge end potential,
wherein the discharge end potential switching means is capable of switching the discharge end potential between the first potential VDp1 and a second potential VDp2 which is lower than the first potential VDp1,
the lithium secondary battery further includes a temperature measurement section for measuring a battery temperature T during the discharge; and
the discharge end potential switching means is adapted to switch the discharge end potential in accordance with the battery temperature T measured by the temperature measurement section, wherein
when the detected battery temperature T is higher than a prescribed temperature Tx, the discharge end potential is set to the first potential VDp1; whereas when the detected battery temperature T is equal to or lower than the prescribed temperature Tx, the discharge end potential is set to the second potential VDp2.

14. The charge/discharge system of claim 12 or 13, wherein the prescribed temperature Tx is set to a level which is no less than -10°C and no more than 60°C, and the irreversible capacity of the positive electrode at the prescribed temperature Tx is larger than the irreversible capacity of the negative electrode.

15. The charge/discharge system of any one of claims 9 through 14, wherein the nickel-type lithium-containing complex oxide has a composition represented by LiₐNi_{1-(b+c)}Co_{b}M_{c}O₂ (1.0 ≤ at 1.05, 0.1 ≤ b ≤ 0.35, 0.005 ≤ c ≤ 0.30, and M is at least one selected from Al, Sr and Ca).

16. An electronic device comprising the charge/discharge system of any one of claims 9 through 15.

17. A vehicle comprising the charge/discharge system of any one of claims 9 through 15.

18. A battery pack comprising the charge/discharge system of any one of claims 9 through 15.

19. A battery module comprising the charge/discharge system of any one of claims 9 through 15.

## Patentansprüche

1. Lade-/Entladeverfahren für ein aktives Positivelektrodenmaterial in einem Lithiumakkumulator (30, 43, 111), wobei:
der Lithiumakkumulator eine positive Elektrode (5, 11) mit dem aktiven Positivelektrodenmaterial, das in der Lage ist, Lithiumionen aufzunehmen und freizugeben, eine negative Elektrode (6, 12), die ein aktives Negativelektrodenmaterial enthält, das in der Lage ist, Lithiumionen aufzunehmen und freizugeben, einen Separator (7, 13), der zwischen der positiven Elektrode (5, 11) und der negativen Elektrode (6, 12) lokalisiert ist, einen Elektrolyt, der eine Lithiumionenleitfähigkeit aufweist, und eine Referenzelektrode (96) enthält; und
das aktive Positivelektrodenmaterial ein Oxid, das einen lithiumenthaltenden Komplex eines Nickeltyps enthält;
das aktive Negativelektrodenmaterial ein siliziumbasiertes aktives Material enthält;
das Lade-/Entladeverfahren Durchführen eines ersten Ladens/Entladens des Entladens der positiven Elektrode (5, 11), die geladen wurde, bis ein positives Elektrodenpotential Vp auf einer Lithiummetallbasis, das basierend auf einer Potentialdifferenz zwischen der Referenzelektrode (96) und der positiven Elektrode (5, 11) gefunden wird, ein erstes Potential VDp1 wird, das nicht weniger als 2,7 V und nicht mehr als 3,4 V ist, und dann Beenden des Entladens aufweist,
**dadurch gekennzeichnet, dass**
eine Kapazität des aktiven Negativelektrodenmaterials größer als eine Kapazität des aktiven Positivelektrodenmaterials ist.

2. Lade-/Entladeverfahren für ein aktives Positivelektrodenmaterial nach Anspruch 1, wobei das erste Laden/Entladen und ein zweites Laden/Entladen des Entladens der positiven Elektrode, die geladen wurde, bis das positive Elektrodenpotential Vp auf einer Lithiummetallbasis ein zweites Potential VDp2 wird, das niedriger ist als das erste Potential VDp1, und dann Beenden des Entladens in einer schaltbaren Weise durchgeführt werden.

3. Lade-/Entladeverfahren für ein aktives Positivelektrodenmaterial nach Anspruch 2, wobei eine Batterietemperatur des Lithiumakkumulators während des Entladens erfasst wird, und das erste Laden/Entladen und das zweite Laden/Entladen gemäß der erfassten Batterietemperatur T geschaltet werden.

4. Lade-/Entladeverfahren für ein aktives Positivelektrodenmaterial nach Anspruch 3, wobei das erste Laden/Entladen durchgeführt wird, wenn die erfasste Batterietemperatur T höher als eine vorgeschriebene Temperatur Tx ist; während das zweite Laden/Entladen durchgeführt wird, wenn die erfasste Batterietemperatur gleich oder kleiner als die vorgeschriebene Temperatur Tx ist.

5. Lade-/Entladeverfahren für ein aktives Positivelektrodenmaterial in einem Lithiumakkumulator (30, 43, 111), wobei:
der Lithiumakkumulator eine positive Elektrode (5, 11) mit dem aktiven Positivelektrodenmaterial, das in der Lage ist, Lithiumionen aufzunehmen und freizugeben, eine negative Elektrode (6, 12), mit einem aktiven Negativelektrodenmaterial, das in der Lage ist, Lithiumionen aufzunehmen und freizugeben, einen Separator (7, 13), der zwischen der positiven Elektrode (5, 11) und der negativen Elektrode (6, 12) lokalisiert ist, ein Elektrolyt mit einer Lithiumionenleitfähigkeit, und eine Referenzelektrode (96) enthält; und
das aktive Positivelektrodenmaterial ein Oxid mit einem lithiumenthaltenden Komplex eines Nickeltyps enthält;
das aktive Negativelektrodenmaterial ein siliziumbasiertes aktives Material enthält;
das Lade-/Entladeverfahren Durchführen eines ersten Ladens/Entladens des Entladens der positiven Elektrode (5, 11), die geladen wurde, bis ein positives Elektrodenpotential Vp auf einer Lithiummetallbasis, das basierend auf einer Potentialdifferenz zwischen der Referenzelektrode (96) und der positiven Elektrode (5, 11) gefunden wird, ein erstes Potential VDp1 wird, das nicht weniger als 2,7 V und nicht mehr als 3,4 V ist, und dann Beenden des Entladens aufweist,
**dadurch gekennzeichnet, dass**
eine irreversible Kapazität des aktiven Positivelektrodenmaterials größer als eine irreversible Kapazität des aktiven Negativelektrodenmaterials ist,
das erste Laden/Entladen und ein zweites Laden/Entladen des Entladens der positiven Elektrode, die geladen wurde, bis das positive Elektrodenpotential Vp auf einer Lithiummetallbasis ein zweites Potential VDp2 wird, das niedriger als das erste Potential VDp1 ist, und dann Beenden des Entladens werden in einer schaltbaren Weise durchgeführt,
eine Batterietemperatur T des Lithiumakkumulators wird während des Entladens erfasst, und das erste Laden/Entladen und das zweite Laden/Entladen werden gemäß der erfassten Batterietemperatur T geschaltet, und
das erste Laden/Entladen wird durchgeführt, wenn die erfasste Batterietemperatur höher als eine vorgeschriebene Temperatur Tx ist, während das zweite Laden/Entladen durchgeführt wird, wenn die erfasste Batterietemperatur gleich oder niedriger als die vorgeschriebene Temperatur Tx ist.

6. Lade-/Entladeverfahren für ein aktives Positivelektrodenmaterial nach Anspruch 4 oder 5, wobei die vorgeschriebene Temperatur T so eingestellt ist, dass sie nicht weniger als -10°C und nicht mehr als 60°C ist.

7. Lade-/Entladeverfahren für ein aktives Positivelektrodenmaterial nach einem der Ansprüche 3 bis 6, wobei die Batterietemperatur T nur erfasst wird, wenn der Lithiumakkumulator eine Batteriespannung gleich oder niedriger als 3,5 V während des Entladens hat,.

8. Lade-/Entladeverfahren für ein aktives Positivelektrodenmaterial nach einem der Ansprüche 1 bis 7, wobei das Oxid mit einem lithiumenthaltenden Komplex eines Nickeltyps eine Zusammensetzung hat, die repräsentiert wird durch LiₐNi_{1-(b+c)}Co_{b}M_{c}O₂ (1.0 ≤ a ≤ 1.05, 0.1 ≤ b ≤ 0.35, 0.005 ≤ c ≤ 0.30, wobei M zumindest eines aus Al, Sr und Cr ist.

9. Lade-/Entladesystem für einen Lithiumakkumulator (30, 43, 111), mit:
dem Lithiumakkumulator (30, 43, 111), der eine positive Elektrode (5, 11), mit einem aktiven Positivelektrodenmaterial, das in der Lage ist, Lithiumionen aufzunehmen und freizugeben, eine negative Elektrode (6, 12), mit einem aktiven Negativelektrodenmaterial, das in der Lage ist, Lithiumionen aufzunehmen und freizugeben, einen Separator (7, 13), der zwischen der positiven Elektrode (5, 11) und der negativen Elektrode (6, 12) lokalisiert ist, einen Elektrolyt mit einer Lithiumionenleitfähigkeit und eine Referenzelektrode (96) enthält;
einer Ladungssteuerungssektion (34, 116) zum Steuern eines Ladens des Lithiumakkumulators (30, 43, 111);
einer Entladungssteuerungssektion (35, 115), zum Steuern eines Entladens des Lithiumakkumulators (30, 43, 111); und
einer Spannungsmesssektion (32, 112); wobei:
das aktive Positivelektrodenmaterial ein Oxid mit einem lithiumenthaltenden Komplex eines Nickeltyps enthält;
das aktive Negativelektrodenmaterial ein siliziumbasiertes aktives Material aufweist;
die Spannungsmesssektion (32, 112) angepasst ist, eine Potentialdifferenz zwischen der Referenzelektrode (96) und der positiven Elektrode (5, 11) während des Entladens des Lithiumakkumulators (30, 43, 111) zu messen, und ein positives Elektrodenpotential Vp auf einer Lithiummetallbasis basierend auf der gemessenen Potentialdifferenz zu finden;
die Entladesteuerungssektion (35, 115) angepasst ist, eine Steuerung so durchzuführen, dass ein Zuführen einer Leistung von dem Lithiumakkumulator (30, 43, 111) zu einer Last gestoppt ist, wenn wahrgenommen wird, dass das positive Elektrodenpotential Vp, das durch die Spannungsmesssektion (32, 111) gefunden wird, ein vorbestimmtes Entladeendpotential erreicht hat, um dadurch das Entladen zu beenden; und
das Entladeendpotential so auf ein erstes Potential VDp1 eingestellt ist, dass es nicht weniger als 2,7 V und nicht mehr als 3,4 V ist,
**dadurch gekennzeichnet, dass**
eine Kapazität des aktiven Negativelektrodenmaterials größer als eine Kapazität des aktiven Positivelektrodenmaterials ist.

10. Lade-/Entladesystem nach Anspruch 8, ferner mit einer Entladeendpotentialschalteinrichtung zum Schalten des Entladeendpotentials,
wobei die Entladeendpotentialschalteinrichtung in der Lage ist, das Entladeendpotential zwischen dem ersten Potential VDp1 und einem zweiten Potential VDp2, das niedriger als das erste Potential VDp1 ist, umzuschalten.

11. Lade-/Entladesystem nach Anspruch 9, wobei
der Lithiumakkumulator ferner eine Temperaturmesssektion zum Messen einer Batterietemperatur während des Entladens aufweist; und
die Entladeendpotentialschalteinrichtung das Entladeendpotential gemäß der Batterietemperatur T, die durch die Temperaturmesssektion gemessen wird, umschaltet.

12. Lade-/Entladesystem nach Anspruch 10, wobei das Entladeendpotential auf das erste Potential VDp1 eingestellt wird, wenn die erfasste Batterietemperatur höher als eine vorgeschriebene Temperatur Tx ist; während das Entladeendpotential auf das zweite Potential VDp2 eingestellt wird, wenn die erfasste Batterietemperatur gleich oder niedriger als die vorgeschriebene Temperatur Tx ist.

13. Lade-/Entladesystem für einen Lithiumakkumulator (30, 43, 111), mit:
dem Lithiumakkumulator (30, 43, 111), der eine positive Elektrode (5, 11) mit einem aktiven Positivelektrodenmaterial, das in der Lage ist, Lithiumionen aufzunehmen und freizugeben, eine negative Elektrode (6, 12) mit einem aktiven Negativelektrodenmaterial, das in der Lage ist, Lithiumionen aufzunehmen und freizugeben, einen Separator (7, 13), der zwischen der positiven Elektrode (5, 11) und der negativen Elektrode (6, 12) lokalisiert ist, einen Elektrolyt mit einer Lithiumionenleitfähigkeit, und eine Referenzelektrode (96) enthält;
einer Ladungssteuerungssektion (34, 116) zum Steuern eines Ladens des Lithiumakkumulators (30, 43, 111);
einer Entladesteuerungssektion (35, 115), zum Steuern eines Entladens des Lithiumakkumulators (30, 43, 111); und
einer Spannungsmesssektion (32, 112); wobei:
das aktive Positivelektrodenmaterial ein Oxid mit einem lithiumenthaltenden Komplex eines Nickeltyps enthält;
das aktive Negativelektrodenmaterial ein siliziumbasiertes aktives Material enthält;
die Spannungsmesssektion (32, 112) angepasst ist, eine Potentialdifferenz zwischen der Referenzelektrode (96) und der positiven Elektrode (5, 11) während des Entladens des Lithiumakkumulators (30, 43, 111) zu messen und ein positives Elektrodenpotential Vp auf einer Lithiummetallbasis basierend auf der gemessenen Potentialdifferenz zu finden;
die Entladesteuerungssektion (35, 115) angepasst ist, eine Steuerung so durchzuführen, dass ein Zuführen einer Leistung von dem Lithiumakkumulator (30, 43, 111) zu einer Last gestoppt wird, wenn wahrgenommen wird, dass das positive Elektrodenpotential Vp, das durch die Spannungsmesssektion (32, 111) gefunden wird, ein vorbestimmtes Entladeendpotential erreicht hat, wodurch die Entladung gestoppt wird; und
das Entladeendpotential so auf ein erstes Potential VDp1 eingestellt ist, dass es nicht weniger als 2,7 V und nicht mehr als 3,4 V ist,
**dadurch gekennzeichnet, dass**
eine irreversible Kapazität des aktiven Positivelektrodenmaterials größer als eine irreversible Kapazität des aktiven Negativelektrodenmaterials ist,
das Lade-/Entladesystem ferner eine Entladeendpotentialschalteinrichtung zum Schalten des Entladeendpotentials aufweist,
wobei die Entladeendpotentialschalteinrichtung in der Lage ist, das Endladeendpotential zwischen dem ersten Potential VDp1 und einem zweiten Potential VDp2, das niedriger ist als das erste Potential VDp1, umzuschalten,
der Lithiumakkumulator ferner eine Temperaturmesssektion zum Messen einer Batterietemperatur T während des Entladens enthält; und
die Entladeendpotentialschalteinrichtung angepasst ist, das Entladeendpotential gemäß der durch die Temperaturmesssektion gemessenen Batterietemperatur T zu schalten, wobei
das Entladeendpotential auf das erste Potential VDp1 eingestellt wird, wenn die erfasste Batterietemperatur T höher als eine vorgeschriebene Temperatur Tx ist; während das Entladeendpotential auf das zweite Potential VDp2 eingestellt wird, wenn die erfasste Batterietemperatur gleich oder niedriger als die vorgeschriebene Temperatur Tx ist.

14. Lade-/Entladesystem nach Anspruch 12 oder 13, wobei die vorgeschriebene Temperatur Tx auf ein Niveau gesetzt wird, das nicht weniger als -10°C und nicht mehr als 60°C ist, und die irreversible Kapazität der positiven Elektrode bei der vorgeschriebenen Temperatur Tx größer als die irreversible Kapazität der negativen Elektrode ist.

15. Lade-/Entladesystem nach einem der Ansprüche 9 bis 14, wobei das Oxid mit einem lithiumenthaltenden Komplex eines Nickeltyps eine Zusammensetzung hat, die repräsentiert wird durch LiₐNi_{1-(b+c)}Co_{b}M_{c}O₂ (1.0 ≤ a ≤ 1.05, 0.1 ≤ b ≤ 0.35, 0.005 ≤ c ≤ 0.30, wobei M zumindest eines aus Al, Sr und Cr ist.

16. Elektronische Vorrichtung mit dem Lade-/Entladesystem nach einem der Ansprüche 9 bis 15.

17. Fahrzeug mit dem Lade-/Entladesystem nach einem der Ansprüche 9 bis 15.

18. Batteriepack mit dem Lade-/Entladesystem nach einem der Ansprüche 9 bis 15.

19. Batteriemodul mit dem Lade-/Entladesystem nach einem der Ansprüche 9 bis 15.

## Revendications

1. Procédé de charge/décharge pour un matériau actif d'électrode positive dans une batterie secondaire au lithium (30, 43, 111), dans lequel :
la batterie secondaire au lithium comporte une électrode positive (5, 11) contenant le matériau actif d'électrode positive capable d'occlure et de libérer des ions lithium, une électrode négative (6, 12) contenant un matériau actif d'électrode négative capable d'occlure et de libérer des ions lithium, un séparateur (7, 13) situé entre l'électrode positive (5, 11) et l'électrode négative (6, 12), un électrolyte présentant une conductivité lithium-ion, et une électrode de référence (96) ; et
le matériau actif d'électrode positive contient un oxyde complexe de lithium-nickel ;
le matériau actif d'électrode négative contient un matériau actif à base de silicium ;
le procédé de charge/décharge comprenant le fait d'effectuer une première charge/décharge qui consiste à décharger l'électrode positive (5, 11), qui a été chargée, jusqu'à ce qu'un potentiel de l'électrode positive Vp sur une base lithium-métal qui est trouvé en se basant sur une différence de potentiel entre l'électrode de référence (96) et l'électrode positive (5, 11) devienne égal à un premier potentiel VDp1 qui n'est pas inférieur à 2,7 V et ne dépassant 3,4 V, et ensuite à terminer la décharge,
**caractérisé en ce que**
une capacité du matériau actif d'électrode négative est supérieure à une capacité du matériau actif d'électrode positive.

2. Procédé de charge/décharge pour un matériau actif d'électrode positive de la revendication 1, dans lequel la première charge/décharge, et une deuxième charge/décharge qui consiste à décharger l'électrode positive, qui a été chargée, jusqu'à ce que le potentiel de l'électrode positive Vp sur une base lithium-métal devienne égal à un deuxième potentiel VDp2 qui est inférieur au premier potentiel VDp1 et ensuite à terminer la décharge, sont effectuées de manière commutable.

3. Procédé de charge/décharge pour un matériau actif d'électrode positive de la revendication 2, dans lequel une température de batterie T de la batterie secondaire au lithium est détectée pendant la décharge, et la première charge/décharge et la deuxième charge/décharge sont commutées conformément à la température de batterie T détectée.

4. Procédé de charge/décharge pour un matériau actif d'électrode positive de la revendication 3, dans lequel lorsque la température de batterie T détectée est supérieure à une température prescrite Tx, la première charge/décharge est effectuée ; tandis que lorsque la température de batterie T détectée est inférieure ou égale à la température prescrite Tx, la deuxième charge/décharge est effectuée.

5. Procédé de charge/décharge pour un matériau actif d'électrode positive dans une batterie secondaire au lithium (30, 43, 111), dans lequel :
la batterie secondaire au lithium comporte une électrode positive (5, 11) contenant le matériau actif d'électrode positive capable d'occlure et de libérer des ions lithium, une électrode négative (6, 12) contenant un matériau actif d'électrode négative capable d'occlure et de libérer des ions lithium, un séparateur (7, 13) situé entre l'électrode positive (5, 11) et l'électrode négative (6, 12), un électrolyte présentant une conductivité lithium-ion, et une électrode de référence (96) ; et
le matériau actif d'électrode positive contient un oxyde complexe de lithium-nickel ;
le matériau actif d'électrode négative contient un matériau actif à base de silicium ;
le procédé de charge/décharge comprenant le fait d'effectuer une première charge/décharge qui consiste à décharger l'électrode positive (5, 11), qui a été chargée, jusqu'à ce qu'un potentiel d'électrode positive Vp sur une base lithium-métal qui est trouvé en se basant sur une différence de potentiel entre l'électrode de référence (96) et l'électrode positive (5, 11) devienne égal à un premier potentiel VDp1 qui n'est pas inférieur à 2,7 V et ne dépassant pas 3,4 V, et ensuite à terminer la décharge,
**caractérisé en ce que**
une capacité irréversible du matériau actif d'électrode positive est supérieure à une capacité irréversible du matériau actif d'électrode négative,
la première charge/décharge, et une deuxième charge/décharge qui consiste à décharger l'électrode positive, qui a été chargée, jusqu'à ce que le potentiel de l'électrode positive Vp sur une base lithium-métal devienne égal à un deuxième potentiel VDp2 qui est inférieur au premier potentiel VDp1 et ensuite à terminer la décharge, sont effectuées de manière commutable,
une température de batterie T de la batterie secondaire au lithium est détectée pendant la décharge, et la première charge/décharge et la deuxième charge/décharge sont commutées conformément à la température de batterie T détectée, et
lorsque la température de batterie T détectée est supérieure à une température prescrite Tx, la première charge/décharge est effectuée ; tandis que lorsque la température de batterie T détectée est inférieure ou égale à la température prescrite Tx, la deuxième charge/décharge est effectuée.

6. Procédé de charge/décharge pour un matériau actif d'électrode positive de la revendication 4 ou 5, dans lequel la température prescrite T est réglée pour être non inférieure à -10°C et non supérieure à 60°C.

7. Procédé de charge/décharge pour un matériau actif d'électrode positive de l'une quelconque des revendications 3 à 6, dans lequel la température de batterie T n'est détectée que lorsque la batterie secondaire au lithium présente une tension de batterie inférieure ou égale à 3,5 V pendant la décharge.

8. Procédé de charge/décharge pour un matériau actif d'électrode positive de l'une quelconque des revendications 1 à 7, dans lequel l'oxyde complexe de lithium-nickel a une composition représentée par LiₐNi_{1-(b+c)}Co_{b}M_{c}O₂ (1, 0 ≤ a ≤ 1,05, 0,1 ≤ b ≤ 0, 35, 0,005 ≤ c ≤ 0, 30, et M est au moins un élément choisi parmi Al, Sr et Ca).

9. Système de charge/décharge pour une batterie secondaire au lithium (30, 43, 111), comprenant :
la batterie secondaire au lithium (30, 43, 111) comportant une électrode positive (5, 11) contenant un matériau actif d'électrode positive capable d'occlure et de libérer des ions lithium, une électrode négative (6, 12) contenant un matériau actif d'électrode négative capable d'occlure et de libérer des ions lithium, un séparateur (7, 13) situé entre l'électrode positive (5, 11) et l'électrode négative (6, 12), un électrolyte présentant une conductivité lithium-ion, et une électrode de référence (96) ;
une section de commande de charge (34, 116) destinée à commander la charge de la batterie secondaire au lithium (30, 43, 111) ;
une section de commande de décharge (35, 115) destinée à commander la décharge de la batterie secondaire au lithium (30, 43, 111) ; et
une section de mesure de tension (32, 112) ; où :
le matériau actif d'électrode positive contient un oxyde complexe de lithium-nickel ;
le matériau actif d'électrode négative contient un matériau actif à base de silicium ;
la section de mesure de tension (32, 112) est adaptée pour mesurer une différence de potentiel entre l'électrode de référence (96) et l'électrode positive (5, 11) pendant la décharge de la batterie secondaire au lithium (30, 43, 111), et trouve un potentiel d'électrode positive (Vp) sur une base lithium-métal en se basant sur la différence de potentiel mesurée ;
la section de commande de décharge (35, 115) est adaptée pour effectuer une commande de sorte que lorsqu'il est détecté que le potentiel de l'électrode positive Vp trouvé par la section de mesure de tension (32, 111) a atteint un potentiel prédéterminé de fin de décharge, l'alimentation de l'énergie depuis la batterie secondaire au lithium (30, 43, 111) à une charge soit arrêtée, terminant ainsi la décharge ; et
le potentiel de fin de décharge est réglé à un premier potentiel VDp1 qui n'est pas inférieur à 2,7 V et ne dépassant pas 3,4 V,
**caractérisé en ce que**
une capacité du matériau actif d'électrode négative est supérieure à une capacité du matériau actif d'électrode positive.

10. Système de charge/décharge de la revendication 8, comprenant en outre un moyen de commutation de potentiel de fin de décharge destiné à commuter le potentiel de fin de décharge,
dans lequel le moyen de commutation de potentiel de fin de décharge est capable de commuter le potentiel de fin de décharge entre le premier potentiel VDp1 et un deuxième potentiel VDp2 qui est inférieur au premier potentiel VDp1.

11. Système de charge/décharge de la revendication 9, dans lequel :
la batterie secondaire au lithium comporte en outre une section de mesure de température destinée à mesurer une température de batterie T pendant la décharge ; et
le moyen de commutation de potentiel de fin de décharge commute le potentiel de fin de décharge conformément à la température de batterie T mesurée par la section de mesure de température.

12. Système de charge/décharge de la revendication 10, dans lequel lorsque la température de batterie T détectée est supérieure à une température prescrite Tx, le potentiel de fin de décharge est réglé au premier potentiel VDp1 ; tandis que lorsque la température de batterie T détectée est inférieure ou égale à la température prescrite Tx, le potentiel de fin de décharge est réglé au deuxième potentiel VDp2.

13. Système de charge/décharge pour une batterie secondaire au lithium (30, 43, 111), comprenant :
la batterie secondaire au lithium (30, 43, 111) comportant une électrode positive (5, 11) contenant un matériau actif d'électrode positive capable d'occlure et de libérer des ions lithium, une électrode négative (6, 12) contenant un matériau actif d'électrode négative capable d'occlure et de libérer des ions lithium, un séparateur (7, 13) situé entre l'électrode positive (5, 11) et l'électrode négative (6, 12), un électrolyte présentant une conductivité lithium-ion , et une électrode de référence (96) ;
une section de commande de charge (34, 116) destinée à commander la charge de la batterie secondaire au lithium (30, 43, 111) ;
une section de commande de décharge (35, 115) destinée à commander la décharge de la batterie secondaire au lithium (30, 43, 111) ; et
une section de mesure de tension (32, 112) ; où :
le matériau actif d'électrode positive contient un oxyde complexe de lithium-nickel ;
le matériau actif d'électrode négative contient un matériau actif à base de silicium ;
la section de mesure de tension (32, 112) est adaptée pour mesurer une différence de potentiel entre l'électrode de référence (96) et l'électrode positive (5, 11) pendant la décharge de la batterie secondaire au lithium (30, 43, 111), et trouve un potentiel d'électrode positive (Vp) sur une base lithium-métal en se basant sur la différence de potentiel mesurée ;
la section de commande de décharge (35, 115) est adaptée pour effectuer une commande de sorte que lorsqu'il est détecté que le potentiel de l'électrode positive Vp trouvé par la section de mesure de tension (32, 111) a atteint un potentiel prédéterminé de fin de décharge, l'alimentation de l'énergie depuis la batterie secondaire au lithium (30, 43, 111) à une charge soit arrêtée, terminant ainsi la décharge ; et
le potentiel de fin de décharge est réglé à un premier potentiel VDp1 qui n'est pas inférieur à 2,7 V et ne dépassant pas 3,4 V,
**caractérisé en ce que**
une capacité irréversible du matériau actif d'électrode positive est supérieure à une capacité irréversible du matériau actif d'électrode négative,
le système de charge/décharge comprend en outre un moyen de commutation de potentiel de fin de décharge destiné à commuter le potentiel de fin de décharge,
où le moyen de commutation de potentiel de fin de décharge est capable de commuter le potentiel de fin de décharge entre le premier potentiel VDp1 et un deuxième potentiel VDp2 qui est inférieur au premier potentiel VDp1,
la batterie secondaire au lithium comporte en outre une section de mesure de température destinée à mesurer une température de batterie T pendant la décharge ; et
le moyen de commutation de potentiel de fin de décharge est adapté pour commuter le potentiel de fin de décharge conformément à la température de batterie T mesurée par la section de mesure de température, où
lorsque la température de batterie T détectée est supérieure à une température prescrite Tx, le potentiel de fin de décharge est réglé au premier potentiel VDp1 ; tandis que lorsque la température de batterie T détectée est inférieure ou égale à la température prescrite Tx, le potentiel de fin de décharge est réglé au deuxième potentiel VDp2.

14. Système de charge/décharge de la revendication 12 ou 13, dans lequel la température prescrite Tx est réglée à un niveau qui n'est pas inférieur à -10°C et ne dépassant pas 60°C, et la capacité irréversible de l'électrode positive à la température prescrite Tx est plus grande que la capacité irréversible de l'électrode négative.

15. Système de charge/décharge de l'une quelconque des revendications 9 à 14, dans lequel l'oxyde complexe de lithium-nickel a une composition représentée par LiₐNi_{1-(b+c)}Co_{b}M_{c}O₂ (1,0 ≤ a ≤ 1,05, 0,1 ≤ b ≤ 0,35, 0,005 ≤ c ≤ 0,30, et M est au moins un élément choisi parmi Al, Sr et Ca).

16. Dispositif électronique comprenant le système de charge/décharge de l'une quelconque des revendications 9 à 15.

17. Véhicule comprenant le système de charge/décharge de l'une quelconque des revendications 9 à 15.

18. Bloc-batterie comprenant le système de charge/décharge de l'une quelconque des revendications 9 à 15.

19. Module de batterie comprenant le système de charge/décharge de l'une quelconque des revendications 9 à 15.
